# EUROPEAN PATENT APPLICATION

(11) **EP 1 693 833 A1**
(43) Date of publication of application: **23.08.2006**
(21) Application number: 04820293.1
(22) Date of filing: 10.12.2004
(51) Int. Cl.: G11B 5/024, G11B 7/0055, G06F 12/14

(54) **DATA RECORDING MEDIUM PROCESSING METHOD AND DEVICE, AND ELECTRONIC DEVICE DISCARDING METHOD AND DEVICE**

(30) Priority: 11.12.2003 JP 2003413036; 25.03.2004 JP 2004089914
(71) Applicant: Orient Instrument Computer Co., Ltd, Osaka-shi, Osaka 536-0014 (JP)
(72) Inventor: ITO, Tomoaki, Orient Instrument Computer Co., Ltd., Joto-ku, Osaka-shi, Osaka 536-0014 (JP)
(74) Representative: Paul, Dieter-Alfred
(86) International application number: PCT/JP2004/018465
(87) International publication number: WO 2005/057555

(57) **Abstract**

There is provided with a method for dealing with data recording media adapted to readily erase magnetic data recorded in magnetic recording media or destroy data recorded in optical recording media and a device for carrying out said method. Further, there is provided with a method for disposing of electronic device for destroying electronic devices and a device for carrying out said method.

A device 1 for dealing with data recording media including an excitation coil 23 for generating a magnetic field having a predetermined strength, a magnetron 31 for radiating an electromagnetic wave having a predetermined frequency at a predetermined strength, and a receptacle 60 adapted to accommodate a magnetic recording medium or an optical recording medium, wherein the receptacle 60 is made of a non-magnetic material capable of shielding the electromagnetic wave, wherein the receptacle 60 has an outer periphery around which the excitation coil 23 is wound so as to induce a magnetic field within the receptacle 60, and wherein the receptacle 60 has a wall provided with the magnetron 31, so that the electromagnetic wave is radiated toward inside of the receptacle 60.

## Description

### BACKGROUND OF THE INVENTION

### TECHNICAL FIELD

The present invention relates to a method for dealing with data recording media and a device for carrying out said method for erasing or destroying data recorded in the data recording media. The present invention also relates to a method for disposing of electronic devices and a device for carrying out said method for destroying data recorded in the electronic devices.

### BACKGROUND ART

There are various kinds of data recording media for recording analog data or digital data; for example, magnetic recording media for recording analog data include a VHS (video Home System) video tape and an 8 mm video tape, and magnetic recording media for recording digital data include a magnetic tape (MT) for a general-purpose computer. Further, optical recording media for recording digital data include a CD (Compact Disc) and a DVD (Digital Versatile Disc), and a MO (Magneto-Optical Disc) that records data by means of both light and magnetism has been also put to practical use.

A CD and a DVD of optical recording media are essentially read-only data recording media whereon data is press-recorded by using an original disk. However, media such as a CD-R (CD Recordable) and a DVD-R (DVD Recordable), whereon data is recordable only once by a recording device, or a CD-RW (CD ReWritable) and a DVD-RW (DVD ReWritable), whereon data is repeatedly recordable, have been also put to practical use.

When a read-only CD and DVD or a CD-R and a DVD-R of these optical recording media are abandoned after use, recorded data cannot be erased, resulting in requiring destruction of the recorded data or the media themselves in view of security of data. Further, even if an erasing operation is done to the recorded data, in the case of a CD-RW and a DVD-RW, only their indexes that indicate location information of data are erased and the data itself remains. Therefore, it is necessary to erase the original data by overwriting meaningless data thereon in order to ensure security, requiring heavy workloads and time-consuming.

Still further, a Magneto-Optical Disc (MO) described above records magnetic data on a disk based on data in rising temperature of the disk by means of laser beam and reads the data by detecting the reflective polarization based on magnetization by irradiation with a laser. Although a MO can repeatedly record data by means of a recording device, only its indexes are erased and its data itself remains even if an erasing operation is done to the recorded data, as well as the above-mentioned case of a CD-RW and a DVD-RW. Therefore, in reuse of a MO, it is necessary to erase the original data by overwriting meaningless data thereon in order to ensure security, requiring heavy workloads and time-consuming.

On the other hand, magnetic recording media can be reused after erasure of their recorded data, but the recorded data is not erased only by undergoing physical formatting or logical formatting of the media, causing a problem in ensuring security. Therefore, in reuse of magnetic recording media, it is also necessary to erase the original data by overwriting meaningless data thereon in order to ensure security, requiring heavy workloads and time-consuming.

### DISCLOSURE OF THE INVENTION

### PROBLEMS TO BE SOLVED BY THE INVENTION

Thus, the inventor of this application proposed a magnetic data eraser adapted to completely erase magnetic data recorded in a medium such as a hard disk incorporated in a computer or a magnetic tape used for a general-purpose computer in the prior application (Japanese Patent Application No. 2003-307606). The magnetic data eraser makes it possible to erase recorded data in a hard disk drive or a magnetic tape with certainty in a short period of time and to readily ensure security in reuse, requiring no workloads or time-consuming for overwriting meaningless data.

However, the magnetic data eraser proposed in the prior application (Japanese Patent Application No. 2003-307606) was not designed to respond to optical recording media. That has still necessitated destruction of data by mechanically destroying a disk itself or scratching a data recording surface of the disk in disposing of an optical recording medium. As just mentioned, in disposing of an optical recording medium, workloads are required, and further data might be read out from fragments of the disposed disk, not being fully secured.

Therefore, development of a device for dealing with data recording media adapted to not only erase magnetic data recorded in magnetic recording media but also readily destroy data recorded in optical recording media has been expected.

Further, unlike the problem of data recording media described above, recently, a device such as a compact cell-phone has increasingly become common and optional functions have been made diversified; cell-phones with a camera function as well as a memory device dial function or an e-mail function have been put in practical use. These cell-phones necessitate a very large memory device in order to save data such as names or telephone numbers of calling parties, names or e-mail addresses of destinations of e-mails, or images shot by the camera. Consequently, a memory device incorporated in a cell-phone has been also made very large and a model augmentable of capacity of memory device by installing a further memory device card in an external memory device slot if necessary has been developed.

Since a string of cell-phone models such as a model with renewal speech quality or design or a model with a new optional function are released in the short term, a number of users exchange the models in present use for new models. The older models are collected, but the collected amount is so enormous that they are disposed of without being reused.

However, a number of users of cell-phones leave data stored in the previously used cell-phones unerased in model exchange, so that data stored in the collected cell-phones might leak outside in recycling processes. Therefore, collectors are obliged to erase all data restored in cell-phones collected in large quantities before recycling in order to ensure security, requiring time-consuming, and thus an improvement has been desired.

It is therefore an object of the present invention made in view of such problems and drawbacks described above to provide a method for dealing with data recording media and a device for carrying out said method adapted to readily erase magnetic data recorded in magnetic recording media and destroy data recorded in optical recording media. It is also an object of the present invention simultaneously proposed to provide a method for disposing of electronic devices and a device for carrying out said method adapted to readily destroy electronic devices such as a cell-phone or a memory card so as to prevent stored data from being read out.

### SUMMARY OF THE INVENTION

One of aspects of the invention proposed to achieve the above-mentioned object is a method for dealing with data recording media using a device provided with a generator of a magnetic field and a generator of an electromagnetic wave, the method including the steps of generating at least one selected from a magnetic field and an electromagnetic wave, and applying individually one selected from the magnetic field and the electromagnetic wave or simultaneously the both to a data recording medium, so as to erase or destroy data recorded in the medium.

The data recording media called in the present invention include a magnetic recording medium and an optical recording medium, the magnetic recording medium referring to a magnetic tape such as a video tape used at home, the optical recording medium referring to a medium recording data such as pits having various light reflection levels on a disk. A MO (magnetic optical disk), as described above, is a medium recording magnetic data on a disk in rising temperature of the disk by means of laser beam, so as to be described as being counted among the magnetic recording medium for convenience of description in the present invention.

Since there is a difference in data recording pattern on media between the magnetic recording medium and the optical recording medium, methods for making it impossible to read out data are different each other.

Specifically, a VHS video tape or an 8 mm video tape belonging to the magnetic recording medium, as described above, recorded data is not erased only by undergoing physical formatting or logical formatting of the medium. However, as disclosed in the prior application (Japanese Patent Application No. 2003-307606), application of a magnetic field to the magnetic recording medium erases recorded data or disorders recorded data so as to equivalently make it impossible to read out the data.

On the other hand, a CD or a DVD belonging to the optical recording medium is a medium forming concavities referred to as pits based on data on a disk made of plastic or polycarbonate and is provided with a vapor-deposited aluminum film and a protection layer for reading out reflected light by radiating laser beams to the pits.

Consequently, data recorded in a CD (CD-R) or a DVD (DVD-R) cannot be erased as well as magnetic data is done. Only in the case of a CD-RW or a DVD-RW, overwriting meaningless data can make it impossible to read out original data. Thus, in disposal of a CD (CD-R) or a DVD (DVD-R), data must be destroyed to ensure security of recorded data. Therefore, formed pits or a vapor-deposited aluminum film must be mechanically destroyed by means such as heating.

Further, on a magnetic optical disk (MO) belonging to the magnetic recording medium, as described above, magnetic data is recorded with temperature rising by laser beams. Thus, mere application of a magnetic field cannot efficiently erase recorded magnetic data as well as a magnetic tape is done. Consequently, in order to make it impossible to read out data in reuse of a MO, a magnetic field must be applied to the MO with rising in temperature.

According to the present aspect, a magnetic field of a predetermined strength is singly generated to be applied to a magnetic recording medium, thereby erasing magnetic data recorded in the magnetic recording medium. Further, an electromagnetic field of a predetermined frequency and a predetermined strength is singly generated to be applied to an optical recording medium, thereby destroying recorded data by deformation by heat of pits or a vapor-deposited aluminum film formed on the optical recording medium. Herein, generation and application to a data recording medium of a magnetic field or those of an electromagnetic field can be done sequentially or alternately. In this case, at one point of time, a magnetic field or an electromagnetic field is singly generated and applied.

Further, as to a magnetic optical disk (MO) belonging to the magnetic recording medium, simultaneous generation of a magnetic field of a predetermined strength and an electromagnetic wave of a predetermined frequency and a predetermined strength simultaneously applies the generated magnetic field and electromagnetic wave to the MO, which is exposed to the magnetic field in rising in temperature, whereby recorded data is erased or destroyed. Herein, proper adjustment of the strength of the electromagnetic wave erases only magnetic data without destroying the MO. Simultaneous generation and application of such a magnetic field and an electromagnetic wave also simultaneously erase data recorded in the magnetic recording medium other than a MO and destroy data recorded in the optical recording medium.

Another aspect of the invention proposed to solve a similar problem is a device for dealing with data recording media including an excitation coil for generating a magnetic field, a magnetron for radiating an electromagnetic wave, and a receptacle adapted to accommodate a data recording medium, wherein the receptacle is made of a non-magnetic material capable of shielding the electromagnetic wave, wherein the receptacle has an outer periphery around which the excitation coil is wound so as to induce a magnetic field within the receptacle, and wherein the receptacle has a wall provided with the magnetron, so that the electromagnetic wave is radiated toward inside of the receptacle.

Magnetic field lines and an electromagnetic wave are shielded by a magnetic material such as iron. Magnetic field lines are not shielded by a non-magnetic material such as copper, but an electromagnetic wave having a specified frequency band is shielded by a non-magnetic material such as copper.

According to the present aspect, the excitation coil is wound around the outer periphery of the receptacle made of a non-magnetic material, so that a magnetic field generated in the coil is applied to inside of the receptacle through the wall of the receptacle. Further, the magnetron is attached to the wall of the receptacle made of a non-magnetic material, so as to radiate an electromagnetic wave toward inside of the receptacle. Consequently, appropriate setting of a frequency of the electromagnetic wave prevents the electromagnetic wave from leaking out of the receptacle while the electromagnetic wave is radiated toward inside of the receptacle.

The present aspect employs such a configuration that the receptacle made of a non-magnetic material and adapted to accommodate a data recording medium is provided with both the magnetron for generating an electromagnetic wave and the excitation coil for generating a magnetic field, so as to readily carry out the above-mentioned method.

Still another aspect of the present invention proposed to solve a similar problem is a device for dealing with data recording media including a magnetron for radiating an electromagnetic wave and a receptacle adapted to accommodate a data recording medium, the receptacle being made of one selected from a non-magnetic material capable of shielding the electromagnetic wave and a magnetic material, wherein the receptacle has a wall provided with the magnetron, so that the electromagnetic wave is radiated toward inside of the receptacle.

In addition to the configuration of the above-mentioned aspects, the device may include at least one selected from an adsorber for adsorbing gas generated from the data recording medium by radiation of the electromagnetic wave and a discharger for discharging gas generated from the data recording medium out of the receptacle. Further, a device for disposing of electronic devices described below may employ a similar configuration.

Herein, the data recording medium often uses a main body casing to which a material such as synthetic resin is formed. Therefore, radiation of an electromagnetic wave generates gas by heating the synthetic resin having high water content to a high temperature depending on a frequency of radiation time of the electromagnetic wave, resulting in producing foul odors because of the generated gas staying within the receptacle.

According to the present aspect, the adsorber adsorbs the generated gas so as to deodorize or the discharger discharges the generated gas out of the receptacle so as to prevent the gas from staying within the receptacle.

The present aspect may employ such a configuration as using an adsorbent such as an activated carbon in the adsorber for example. The adsorbent provided within the receptacle deodorizes. As the discharger, it is possible to employ such a configuration as forcing to discharge the gas staying within the receptacle outside by connection of a discharge fan to a discharge duct mounted on the receptacle.

In addition to the configuration of the above-mentioned aspect, the receptacle may have a door made of a magnetic material, through which the data recording medium is accommodated therein and taken out thereof. Further, the device for disposing of electronic devices described below may employ a similar configuration.

According to the present aspect, the data recording medium is readily taken in and out of the receptacle by opening of the door. Further, as the door is made of a magnetic material such as iron, closing of the door shields the magnetic field induced and the electromagnetic wave radiated in the receptacle leaking outside.

That makes it easy to take the data recording medium in and out of the receptacle, and prevents the magnetic field and the electromagnetic wave from leaking, so as to improve security.

In addition to the configuration of the above-mentioned aspect, the device may include a conveyor adapted to convey the data recording medium so as to extend through the receptacle and a door made of a magnetic material and being openable and closable at a portion where the conveyor extends through the receptacle. Further, the device for disposing of electronic devices described below may employ a similar configuration.

According to the present aspect, the data recording media placed on the conveyor are sequentially conveyed to the receptacle, and are efficiently dealt with. Further, as a door made of a magnetic material is provided at each of the portions where the media are conveyed in and out, the door is closed so that the electromagnetic wave radiated inside of the receptacle is prevented from leaking while the medium is conveyed into the receptacle and dealt with.

In the present invention, the door and a mechanism for opening and closing the door may employ various kinds of aspects.

For example, it is possible to employ such a configuration as having the door made of a magnetic material such as iron and normally urging the door in a closing direction. In this configuration, the door is opened against an urging force to the door by a data recording medium itself or an electronic device incorporating a data recording medium placed on the conveyor, and the door is automatically closed along with passage of these devices.

It is possible to employ another configuration such that the door is made of a magnetic material having flexibility to be opened by pushing of a data recording medium or an electronic device placed on the conveyor and closed back by the flexibility of the door along with movement of the medium or the electronic device. In this case, a material such as a magnetic rubber that is a rubber with metallic powder kneaded may be used as the magnetic material having flexibility.

It is possible to employ still another configuration such that the door is made of a magnetic material such as iron and a detection sensor for detecting a movement position of a data recording medium placed on the conveyor as well. This configuration opens the door when the detection sensor detects the medium and closes the door when detection by the detection sensor is released. The device for disposing of electronic devices described below may employ a configuration similar to these additional configurations as well.

Employment of the above-mentioned configurations as the door and the mechanism for opening and closing of the door makes it possible that the door is closed while the medium placed on the conveyor is conveyed into the receptacle and dealt with, so that the electromagnetic wave radiated inside of the receptacle is prevented from leaking.

In the above-mentioned invention, it is preferable that the conveyor is adapted to continuously convey a plurality of the data recording media at a predetermined speed, so that data recorded in the data recording media placed on the conveyor is continuously erased or destroyed while the media are continuously conveyed at the predetermined speed. Further, the device for disposing of electronic devices described below may employ a similar configuration.

This aspect sequentially places a plurality of data recording media on the conveyor to continuously erase or destroy data. Thereby, the media is efficiently dealt with in a short period of time.

Instead of the aspect, it is possible that the conveyer is adapted to intermittently convey the data recording media, so that data recorded in the data recording media placed on the conveyor is erased or destroyed in a batch method while the media are intermittently conveyed. Further, the device for disposing of electronic devices described below may employ a similar configuration.

This aspect may employ such a batch system as applying a magnetic field or an electromagnetic wave after the medium is conveyed into the receptacle and halting the application of the magnetic field or the electromagnetic field before the medium is conveyed out of the receptacle. That minimizes the magnetic field or the electromagnetic wave leaking out of the receptacle and sequentially deals with the media in the batch system, improving dealing efficiency. The device for disposing of electronic devices described below may employ a configuration similar to either the batch system or the continuous system as well.

In addition to the configurations of the above-mentioned aspects, it is preferable that the receptacle has at least a part of its outer side covered with a casing made of a magnetic material. The casing may be an outer casing. The device for disposing of electronic devices described below may employ a similar configuration.

According to this aspect, at least a part of the outer side of the receptacle is covered with the casing, thereby inhibiting even the magnetic field or the electromagnetic wave leaking from the receptacle from leaking outside, improving security.

In addition to the configurations of the above-mentioned aspect, it is preferable that the casing has at least a part of its inner surface provided with an electromagnetic wave absorbing material. The device for disposing of electronic devices described below may employ a similar configuration.

According to the this aspect, the absorbing material attached to the outer casing absorbs the electromagnetic wave leaking from the receptacle, thereby further reducing the electromagnetic wave leaking out of the casing. That further improves security.

Various kinds of materials can be used as the electromagnetic wave absorbing material. For example, a coat-type electromagnetic wave absorbing material that is a synthetic resin combined with an electromagnetic wave absorbent can be used. A rubber electromagnetic wave absorbing material that is made by dispersing an iron material having electromagnetic wave absorbability into a synthetic rubber can be also used. The rubber electromagnetic wave absorbing material provides superior elasticity and processability and easy attachment.

It is preferable that the magnetron is adapted to radiate an electromagnetic wave having a frequency of a microwave band within a range of 300 MHz to 300 GHz. The same can be said for the device for disposing of electronic devices described below.

As described above, deformation by heat of the vapor-deposited aluminum film or the pits formed on the magnetic optical medium is necessary to destroy recorded data in the medium. However, it is difficult to efficiently heat because the electromagnetic wave is reflected on the film, depending of a frequency of the electromagnetic wave.

From the results of repeated experiments with a frequency of the electromagnetic wave varied, the inventor has found that oscillation of an electromagnetic field having a frequency of a microwave band within a range of 300 MHz to 300 GHz deforms by heat the pits and the film even with small output.

That efficiently destroys data recorded in the magnetic optical media.

It is more preferably that the electromagnetic wave is a microwave having a frequency of substantially 2.45 GHz or substantially 4.3 GHz. The same can be said for the device for disposing of electronic devices described below.

From the results of repeated experiments with a frequency of the electromagnetic wave varied in a microwave band, the inventor has found that oscillation of an electromagnetic wave having a frequency of substantially 2.45 GHz or substantially 4.3 GHz efficiently deforms by heat the pits or the film with small output in a short period of time.

According to this aspect, oscillation of an electromagnetic wave having a frequency of substantially 2.45 GHz or substantially 4.3 GHz by the magnetron efficiently deals with the magnetic optical media.

Herein, an electromagnetic wave having a frequency of substantially 2.45 GHz belongs to a microwave band having a wave length of substantially 12 cm. Further, an electromagnetic wave having a frequency of substantially 4.3 GHz belongs to a microwave band having a wave length of substantially 7 cm as well. Thus, leakage of the radiated electromagnetic wave outside may pose a danger to the human body. However, as described above, such a method as covering the receptacle with the casing made of magnetic material minimizes the leaking electromagnetic wave, thereby ensuring security.

Use of the electromagnetic wave of substantially 2.45 GHz performs a stable radiation of the electromagnetic wave by securing radiation space of substantially 12 cm or more within the receptacle. Similarly, use of the electromagnetic wave of substantially 4.3 GHz performs a stable radiation of the electromagnetic wave by securing radiation space of substantially 7 cm or more within the receptacle. That downsizes the receptacle, thereby achieving space saving.

When a configuration provided with the excitation coil is employed, it is preferable to apply an attenuating alternating voltage whose peak value reduces as time passes to the excitation coil, so as to induce within the receptacle an attenuating alternating magnetic field whose peak value of magnetic flux density reduces as time passes.

Herein, the attenuating alternating magnetic field called in the present invention refers to a magnetic field whose magnetic flux density reduces with alternate polarity reversal of a magnetic field at a specified position.

Normally, rapid application of a magnetic field around a magnetic material magnetizes the material at a predetermined strength. The magnetized material is placed in the magnetic field, so as to gradually reduce the strength of the magnetic field to zero, or the magnetized material is gradually taken away from the magnetic field, so as to be demagnetized. The present aspect takes advantage of this demagnetization characteristic to demagnetize, and applies an attenuating alternating magnetic field to a magnetic recording medium from outside, thereby degaussing recorded magnetic data.

Herein, in order to randomize magnetic data by application of a magnetic field to a magnetic recording medium, it is necessary to apply a strong magnetic field to the medium for a long period of time. That increases an applied electric power or a current-carrying time to the excitation coil, and further might make a structure for shielding the magnetic field leaking outside larger.

However, the present aspect does not apply a magnetic field having a high magnetic flux density for a long period of time, but applies to the medium the attenuating alternating magnetic field whose peak value of magnetic flux density reduces as time passes. Consequently, a magnetic field having a high magnetic flux density is applied to the medium for a short period of time in the beginning of application of the magnetic field, and then the magnetic flux density attenuates as time passes to zero. That avoids application of a magnetic field having high magnetic flux density for a long period of time, while the medium is demagnetized with magnetic data erased. Specifically, the present aspect does not randomize a magnetic orientation (orientate in a specific direction) by applying a strong magnetic field to the medium for a long period of time, but demagnetizes magnetic data themselves by the attenuating alternating magnetic field so as to erase the magnetic data.

Further, as the present aspect applies an attenuating alternating magnetic field, its magnetic flux density remains strong for extremely short period of time. Thereby, a magnetic flux leaking outside along with application of a magnetic field is minimized, so that a shielding structure for a leaking magnetic flux is simplified.

The present invention may employ various configurations as a method for applying an attenuating alternating voltage to the excitation coil. For example, it is possible to employ such a configuration as having a power source circuit for generating the attenuating alternating voltage to apply the attenuating alternating voltage outputted from the power source circuit to the excitation coil. Other configurations may include one such that discharging of an electric charge charged in a capacitor via the coil applies the attenuating alternating voltage (current) to the coil by taking advantage of resonance characteristic determined by the capacitor and the coil.

The above-mentioned device inserts the media such as a video tape, a hard disk, or a DVD singly into the receptacle to destroy data, but may insert electronic devices incorporating these media into the receptacle to destroy the incorporated media.

For example, a main body of a computer incorporating a recording media may be inserted into the receptacle with its outer casing, so that the medium such as a hard disk therein is destroyed.

A cell phone may be also directly inserted into the receptacle, so that the medium such as a storage element is destroyed.

Specifically, it is possible to employ such a configuration that the receptacle is adapted to accommodate an electronic device incorporating a memory device and to destroy data stored in the memory device by radiating an electromagnetic wave to the electronic device accommodated therein.

Yet another aspect of the invention to solve the above-mentioned problems is to provide a method for disposing of electronic devices, the method including the steps of generating an electromagnetic wave having a predetermined frequency and a predetermined strength and radiating the electromagnetic wave to an electronic device, so as to mechanically destroy at least a memory device incorporated in the electronic device to prevent data stored in the memory device from being read out.

Herein, the electronic devices called in the present invention refer to devices incorporating a memory device capable of storing data, and for example, include a personal computer, a cell phone, a portable terminal, or a board (main board) incorporated in these devices. The electronic devices in the present invention also include a memory medium such as a memory card incorporating a memory device, an IC card incorporating an IC chip having a memory function, or an IC tag.

The electronic device is configured with a printed circuit board, on which memory devices (memory integrated circuits), a number of integrated circuits, and a number of circuit members for controlling are mounted, incorporated in a main body of the device. Further, the electronic device such as a memory card (memory medium) is configured with a printed circuit board, on which memory devices (memory integrated circuits), integrated circuits, and circuit members for controlling are mounted, incorporated in a main body of the card. The printed circuit boards of these electronic devices have printed wirings formed thereon that mutually connect the integrated circuits or the circuit members. Further, fine wiring patterns for mutually connecting a number of transistor elements or capacitor elements are formed on the integrated circuits mounted on the printed circuit boards.

Herein, an electromagnetic wave having a frequency of adjacent 2 GHz are apt to be absorbed by water and radiation of an electromagnetic wave of such frequency band to a hydrated substance heats it. It is known that a microwave oven heats and cooks in this method.

Radiation of an electromagnetic wave having a specified frequency band to the above-mentioned electric device from outside of the main body thereof interlinks a magnetic field of the radiated electromagnetic wave and the printed wirings on the printed circuit board or the wiring patterns in the integrated circuits, thereby inducing a high voltage. Thus, the high voltage induced in the printed wirings formed on the printed circuit board brings voltage breakdown and further breaking or short circuit of the printed wirings, and the high voltage is applied also to the circuit members mounted on the printed circuit board, bringing dielectric breakdown (or destruction of insulator) as well. Further, the high voltage induced in the wiring patterns within the integrated circuits brings voltage breakdown and further breaking or short circuit of the wirings patterns, and the high voltage is applied also to the transistor elements or the capacitor elements within the integrated circuits, bringing dielectric breakdown as well.

Specifically, radiation of an electromagnetic wave of a specified frequency band from outside of the electronic device mechanically breaks printed wirings on the printed circuit board incorporated in the device or the integrated circuits and the circuit members mounted on the printed circuit board.

According to the present aspect, on the above-mentioned principle, radiation of an electromagnetic wave to an electronic device breaks a memory device, an integrated circuit for controlling, and a printed circuit board incorporated in the electronic device, thereby preventing data stored in the memory device from being read out. Thereby, destruction is efficiently performed in a short period of time without data erasing for the electronic device every time.

The above-mentioned aspect can be further developed in such a manner that the electronic device is adapted to mount therein another electronic device incorporating a memory device, so that at least the memory device incorporated in the other electronic device mounted in the electronic device is mechanically destroyed by radiation of the electromagnetic wave to the electronic device, so that data stored in the memory device is prevented from being read out.

Herein, a cell phone, for example, has a model capable of enlarging a memory capacity by incorporating another electric device such as a memory card in an external slot if required, as described above. However, as to the external slot provided at the cell phone, the incorporated memory card is mostly covered with a casing or a cover in view of portability. Thus, whether the memory card is incorporated or not therein cannot be determined just by looking appearances, and thus, only data in the memory device incorporated in the electric device is erased and data stored in the memory card may remain without being erased in disposal.

According to the present aspect, radiation of an electromagnetic wave to an electronic device incorporating a memory card mechanically destroys not only a memory device incorporated in the electronic device, but also a memory device incorporated in another electric device such as a memory card incorporated in the electronic device on the above-mentioned principle. That prevents all data stored in the electric device from being read out, thereby ensuring security.

Yet still another aspect of the present invention to solve similar problems is to provide a device for disposing of electronic devices including a magnetron adapted to radiate an electromagnetic wave of a predetermined frequency at a predetermined strength and a receptacle made of a magnetic material and adapted to accommodate an electronic device, wherein the magnetron is attached to the receptacle, so as to radiate the electromagnetic wave toward inside of the receptacle.

According to the present aspect, only with accommodation of an electronic device in the receptacle, an electromagnetic wave radiated from the magnetron is radiated to the electromagnetic device, so that data is destroyed by simple configuration. Further, the receptacle made of a magnetic material prevents the radiated electromagnetic wave from leaking out of the receptacle, improving security.

Further, it is preferable that the device includes one selected from an adsorber for adsorbing gas generated from the electronic device by radiation of the electromagnetic wave and a discharger for discharging gas generated from the electronic device out of the receptacle.

Herein, an electric device such as a cell phone is constituted by a main body casing and a printed circuit board, on which board a number of integrated circuits and circuit members are mounted and printed wirings formed. The main body casing is mostly formed of a material such as synthetic resin, the printed circuit board is mostly formed of phenol resin or glass epoxy resin, and the printed wiring is mostly formed of copper.

Consequently, radiation of an electromagnetic wave to an electronic device such as a cell phone or a memory card may generate gas resulting from heating of resin having high moisture content to a high temperature depending on a frequency or radiation time of the electromagnetic wave, resulting in producing foul odors because of the generated gas staying within the receptacle.

By the present aspect, the adsorber adsorbs and deodorizes the generated gas or the discharger discharges the generated gas out of the receptacle, so that the gas is prevented from staying within the receptacle.

In the present invention, the adsorber may use adsorbent such as an activated carbon, for example, which adsorbent is provided in the receptacle to deodorize. The discharger may employ such a configuration that a discharge fan is connected to a discharge duct provided at the receptacle to force to discharge the gas staying in the receptacle outside.

The device for disposing of electronic devices may further include a conveyor adapted to convey the electronic device into the receptacle and out of the receptacle and a plurality of doors each made of a magnetic material and being openable and closable, one door at one portion through which the electronic device is conveyed into the receptacle and another door at another portion through which the electronic device is conveyed out of the receptacle.

The present aspect sequentially conveys electronic devices placed on the conveyor to the receptacle, so as to efficiently dispose of the devices. Further, a door made of a magnetic material is provided at each of the portions through which the devices are conveyed in and out, so that the door is closed while the devices are in the receptacle and disposed of. That prevents the electromagnetic wave radiated in the receptacle from leaking outside.

Further another aspect disclosed in this application is to provide a device for dealing with data recording media including a receptacle adapted to destroy a data recording medium therein, a conveying means for conveying an electronic device into the receptacle and out of the receptacle, and a feeding means for feeding with the data recording medium.

The conveying means may employ a conveyor. It is preferable that the conveyor is positioned so as to extend through the receptacle, and further includes a door made of a magnetic material and being openable and closable at a portion where the conveyor extends through the receptacle.

The conveyor may be operated even continuously or intermittently.

### ADVANTAGEOUS EFFECT OF THE INVENTION

The present invention provides a method for dealing with data recording media adapted to efficiently erase or destroy data with certainty depending on various data recording media with ensuring security.

One aspect of the invention prevents gas generated associated with dealing with the data recording media from staying, thereby improving work environment.

One aspect of the invention provides a method for dealing with data recording media adapted to readily take the media in and out with improving usability and security.

One aspect of the invention provides a device for dealing with data recording media that improves dealing efficiency with improving security.

One aspect of the invention provides a device for dealing with data recording media that further improves security.

One aspect of the invention provides a device for dealing with data recording media adapted to efficiently deal with data recorded in the media in a short period of time with saving space.

### BRIEF DESCRIPTION OF THE DRAWINGS

Fig. 1 is a basic circuit diagram of a device for dealing with data recording media relating an embodiment of the present invention;
Fig. 2 is a graph showing an attenuating alternating magnetic field induced in a magnetic field generating section of the basic circuit diagram shown in Fig. 1;
Fig. 3 is an exploded perspective view showing an internal structure of the device shown in Fig. 1;
Fig. 4 is a perspective view showing the device shown in Fig. 3;
Fig. 5 is a perspective view showing an internal structure of a device for dealing with data recording media relating to another embodiment in a state in which a VHS video tape is dealt with.
Fig. 6 is a perspective view showing the internal structure of the device shown in Fig. 5 in a state in which a DVD is dealt with.
Fig. 7 is a circuit diagram showing a modified example of the magnetic field generating section of the basic circuit diagram shown in Fig. 1.
Fig. 8 is a basic circuit diagram of a device for dealing with data recording media relating to still another embodiment of the present invention.
Fig. 9 is an exploded perspective view showing an internal structure of the device shown in Fig. 8.
Fig. 10 is a perspective view showing an internal structure of a device for dealing with data recording media relating to yet another embodiment in a state in which a DVD is dealt with.
Fig. 11 is a basic circuit diagram of a device for disposing of electronic devices of an embodiment of the present invention.
Fig. 12 is an exploded perspective view showing an internal structure of the device shown in Fig. 11.
Fig. 13 is a perspective view of the device shown in Fig. 12.
Fig. 14 is a diagram illustrating a printed circuit board installed in an electronic device.
Fig. 15 is a perspective view showing an internal structure of a device for disposing of electronic devices relating to another embodiment of the present invention.

### DESCRIPTION OF THE PREFERRED EMBODIMENTS

Now, a preferred embodiment of the present invention will be described below, making reference to the accompanying drawings.

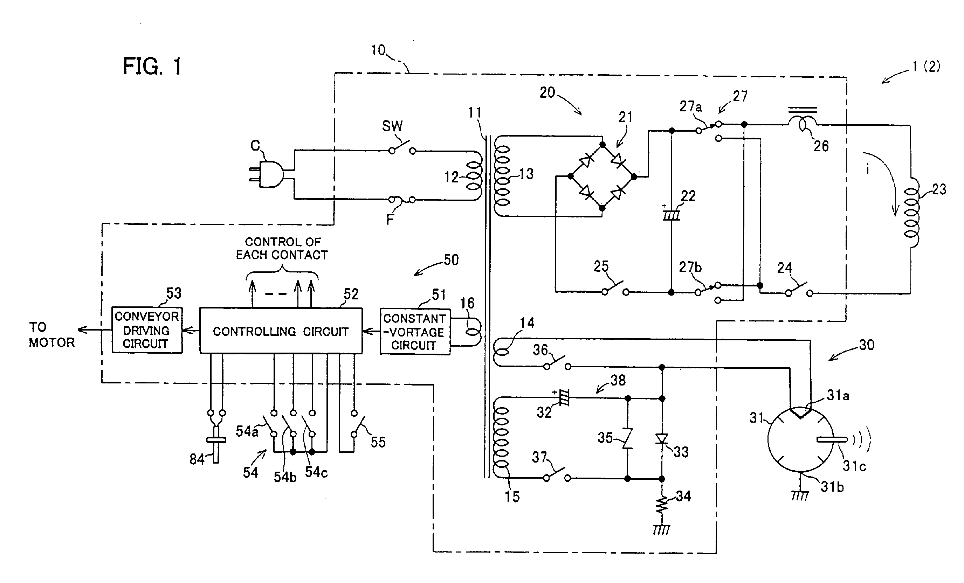

Referring to Fig. 1, a device for dealing with data recording media 1 in the present embodiment mainly consists of a magnetic field generating section 20, an electromagnetic wave generating section 30, a controlling section 50, and a power transformer 11 for supplying AC power source to each of these sections. Each component part will be described in detail below.

The power transformer 11, as shown in Fig.1, generates an AC voltage necessary for each section upon receipt of a commercial power source (AC 100V) and includes a primary winding 12 connected to the AC 100V, a secondary winding 13 connected to the magnetic field generating section 20, secondary windings 14 and 15 connected to the electromagnetic wave generating section 30, and a secondary winding 16 connected to the controlling section 50. The primary winding 12 of the power transformer 11 is connected to an AC power plug C via a power switch SW and a fuse F.

The magnetic field generating section 20, as shown in Fig. 1, has a function of generating an attenuating alternating magnetic field by discharging via an excitation coil 23 an electric charge charged in a capacitor 22. In the section 20, the secondary winding 13 of the power transformer 11 is connected to a bridge diode 21, whereas rectifier output of the bridge diode 21 is connected to the capacitor 22 via a charging contact 25. Both ends of the capacitor 22 are connected to a series circuit consisting of a reactor 26, the excitation coil 23, and an exciting contact 24 via a polarity reversing section 27.

The present embodiment uses a polarized electrolytic capacitor as the capacitor 22. The reactor 26 arranged in series with the excitation coil 23 has a function of providing stabilization of current supplied to the excitation coil 23. Further, the polarity reversing section 27 is provided with contacts 27a and 27b switched relative to one another and has a function of reversing a direction of current flown from the capacitor 22 to the excitation coil 23 by switching the contacts 27a and 27b.

Herein, opening and closing of each contact of the charging contact 25 and the exciting contact 24 of the magnetic field generating section 20 and the contacts 27a and 27b of the polarity reversing section 27 are controlled by means of the controlling section 50 described below.

The magnetic field generating section 20 generates an attenuating alternating magnetic field by the following operation: First, with the exciting contact 24 opened, the discharging contact 25 is closed to discharge the capacitor 22. The capacitor 22 is charged until its charging voltage reaches the peak value of full-wave rectified voltage by the bridge diode 21. Time required for charging is determined based on the capacity of the capacitor 22 and the wiring resistance of the secondary winding 13 of the power transformer 11.

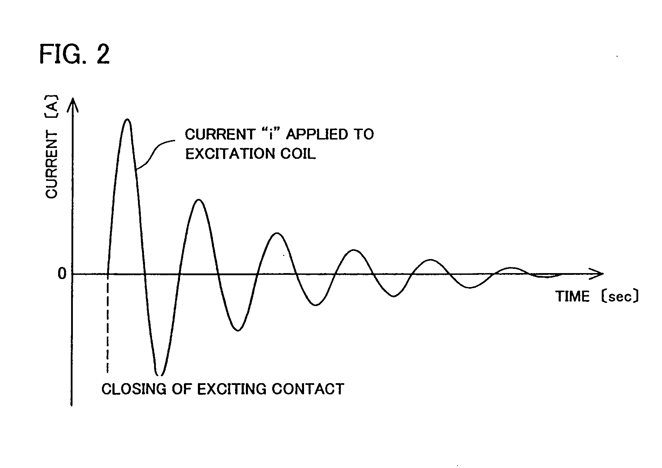

After completion of charging of the capacitor 22, the charging contact 25 is opened. At this moment, the capacitor 22 is fully charged, so that its terminal voltage is substantially equal to the peak vale of the full-wave rectified voltage by the bridge diode 21. Next, when the exciting contact 24 is closed, the electrical charge charged in the capacitor 22 is rapidly discharged via the excitation coil 23. Herein, as the capacitor 22 and the excitation coil 23 are connected in series to form a series resonant circuit, closing of the exciting contact 24 applies an attenuating alternating current "i" whose peak value reduces as time passes to the excitation coil 23, as shown in Fig. 2.

A cycle time of the attenuating alternating current "i" flowing through the excitation coil 23 is generally determined based on the capacity of the capacitor 22 and an inductance of the excitation coil 23. An attenuation rate of the attenuating alternating current "i" is determined based on an internal resistance of the capacitor 22 and a resistance component of the excitation coil 23. Specifically, when the exciting contact 24 is closed, the attenuating alternating current "i" having the cycle time and the attenuation rate determined based on the series resonant circuit composed of the capacitor 22 and the excitation coil 23 is applied to the excitation coil 23, and the applied current is attenuated with reversal of polarity, leading to zero.

Consequently, closing of the exciting contact 24 generates around the excitation coil 23 the attenuating alternating magnetic field whose magnetic flux density gradually reduces with alternating of magnetic polarity as time passes. The magnetic field generating section 20 is adapted to generate an attenuating alternating magnetic field based on this principle and to make use of the generated attenuating alternating magnetic field to erase magnetic data recorded in a magnetic recording medium. More specifically, the magnetic field generating section 20 of the device for dealing with data recording media 1 in the present embodiment is a circuit provided with a function of not generating a strong magnetic field for a long period of time, but generating an attenuating alternating magnetic field whose magnetic flux density reduces as time passes.

The electromagnetic wave generating section 30 has a function of generating an electromagnetic wave of a microwave band. The section 30, as shown in Fig. 1, has a magnetron 31 whose cathode (viz. heater) 31a is connected to the secondary winding (viz. heater winding) 14 of the power transformer 11 via a heater current-carrying contact 36. The secondary winding 15 of the power transformer 11 is connected to a voltage doubler rectifier circuit 38 composed of a capacitor 32 and a diode 33, constituting a circuit in which a positive output voltage of the circuit 38 is connected to an anode 31b of the magnetron 31 via a current-limit resistance 34 and a negative output voltage of the circuit 38 is connected to the cathode 31a of the magnetron 31.

The present embodiment employs a grounded anode circuit in which the anode 31b of the magnetron 31 is connected to ground. Further, a surge absorber 35 is connected in parallel to the diode 33 of the voltage doubler rectifier circuit 38, so as to absorb a surge voltage generated in the circuit to protect the diode 33 from destruction. Herein, opening and closing of the heater current-carrying contact 36 and an anodal current-carrying contact 37 both provided at the electromagnetic wave generating section 30 are controlled by means of the controlling section 50 described below.

The electromagnetic wave generating section 30 generates an electromagnetic wave by the following operation: First, the heater current-carrying contact 36 is closed to heat the cathode (heater) 31a of the magnetron 31, whereby the magnetron 31 is ready to emit thermal electrons from the cathode 31a. Next, the anodal current-carrying contact 37 is closed, whereupon a rectifier output voltage of the voltage doubler rectifier circuit 38 is applied to the anode 31b of the magnetron 31, so that the magnetron 31 starts to oscillate to radiate an electromagnetic wave having a predetermined strength from an antenna 31c. In the present embodiment, the magnetron 31 has an oscillating frequency of substantially 4.3 GHz, and the electromagnetic wave radiated from the antenna 31c is a microwave having a frequency of substantially 4.3 GHz and a wavelength of substantially 7 cm.

The electromagnetic wave generating section 30 generates a microwave by such circuit configuration and has a function of destroying recorded data by applying the generated electromagnetic wave to optical recording media.

The present embodiment uses the magnetron 31 having an oscillating frequency of substantially 4.3 GHz, but may use one having an oscillating frequency of substantially 2.45 GHz.

The controlling section 50, as shown in Fig. 1, includes a constant-voltage circuit 51 and a controlling circuit 52, and has a function of controlling opening and closing of each contact provided at the magnetic field generating section 20 and the electromagnetic wave generating section 30 described above. Herein, a conveyor driving circuit 53 of the controlling section 50 and a detection sensor 84 connected to the controlling circuit 52 are employed in another embodiment described below, and thus the description of these configurations will be described below.

The constant-voltage circuit 51 is a circuit adapted to supply a stabilized DC voltage to the controlling circuit 52 upon receipt of an AC voltage of the secondary winding 16 of the power transformer 11.

The controlling circuit 52 is a circuit adapted for a digital control provided with a CPU, to which circuit 52 a mode setting section 54 composed of a magnetic field generating switch 54a, an electromagnetic wave generating switch 54b, and a magnetic field and electromagnetic wave generating switch 54c, and an operating switch 55 each are connected.

Further, the controlling circuit 52 has a configuration capable of separately controlling opening and closing of a plurality of contacts according to a program manipulation, the contacts each corresponding to each of the contacts of the magnetic field generating section 30 and the electromagnetic wave generating section 30 both described above.

The present embodiment uses mechanically-linked alternate push switches as the switches 54a to 54c of the mode setting section 54, and when one of the switches is pushed in so as to be closed, the other two switches project to be opened. Further, a momentary-type push switch is used as the operating switch 55.

The controlling circuit 52 has such a controlling function as performing program manipulations in response to a setting of the mode setting section 54 and an operation of the operating switch 55 and as generating a magnetic field and/or an electromagnetic wave by an opening and closing control of each of the contacts of the magnetic field generating section 20 and the electromagnetic wave generating section 30 described above.

The device for dealing with data recording media 1 of the present embodiment has the magnetic field generating section 20, the electromagnetic wave generating section 30, and the controlling section 50 each having the above-mentioned function, and a circuit block 10 specified by a dashed line is integrally formed on a circuit board or the like.

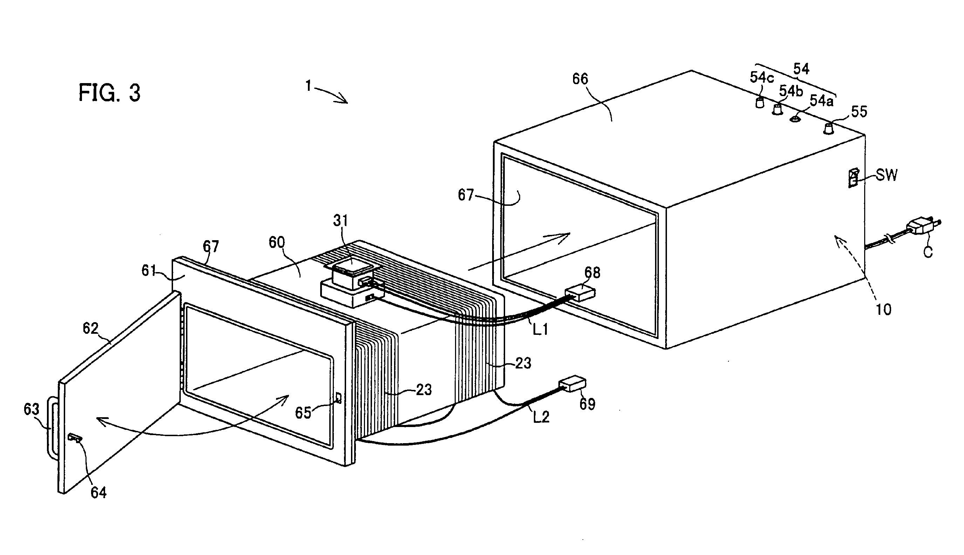

Next, a structure of the device 1 of the present embodiment will be described, making reference to Fig. 3. The device 1 includes a receptacle 60 and an outer casing 66 adapted to cover the receptacle 60 from outside.

The receptacle 60, as shown in Fig. 3, is a square-shaped box made of a non-magnetic material and having a cavity therewithin, its front face being opened, its left, right, top, bottom, and rear faces being closed. In the present embodiment, the receptacle 60 is made of a non-magnetic (copper) plate. The receptacle 60 has the magnetron 31 secured to its central part of the top face, whose antenna 31c (see Fig.1) protrudes into the inner cavity of the receptacle 60. Wirings L1 applying a heater voltage and an anode voltage are connected to the magnetron 31, the wirings L1 having a connecter 68 connected to a distal end thereof.

The receptacle 60 has an outer wall around which the excitation coil 23 is wound from before backward in such a manner as sandwiching the magnetron 31 from both front and rear, both ends of the excitation coil 23 being connected to a connector 69 via wirings L2. In the present embodiment, an enamel wire is used as the excitation coil 23 and an insulating sheet (not shown) is interposed between the excitation coil 23 and the outer periphery of the receptacle 60.

The receptacle 60 has a flange 61 made of a magnetic material at a periphery of the front face thereof and a door 62 mounted on the flange 62 so as to cover the front face of the receptacle 60. Specifically, a left edge of the door 62 is pivoted to a left end portion of the flange 61, so as to be openable and closable.

In the present embodiment, magnetic (iron) plates are used as both the flange 61 and the door 62. The door 62 has a handle 63 at a right end of a front face thereof, and a hook 64 protruding backward adjacent to the handle 63. The flange 61 also has an engagement hole 65 corresponding to the hook 64.

As just described, the receptacle 60 is a box having an opening of the front face made of a non-magnetic (copper) plate, at which opening the flange 61 made of a magnetic (iron) plate is provided, to which flange 61 the door 62 made of a magnetic (iron) plate is openably and closably mounted. An electromagnetic wave absorbing material 67 is attached to an entire rear face of the flange 61. The present embodiment uses as the absorbing material 67 a rubber electromagnetic wave absorbing material that is made by dispersing an iron material having electromagnetic wave absorbability onto a synthetic rubber.

The outer casing 66 is a box made of a magnetic material slightly larger than the receptacle 60, its front face being opened, its left, right, top, bottom, and rear faces being closed, so as to have a shape capable of entirely accommodating the receptacle 60. The same electromagnetic wave absorbing material 67 as attached to the above-mentioned flange 61 is attached to an entire inner surface of the casing 66. Specifically, the casing 66 is a box made of iron with the electromagnetic wave absorbing material 67 attached to the entire inner surface.

The casing 66 incorporates the above-mentioned circuit block 10 shown in Fig. 1 in an inner rear portion thereof, and has a power switch SW at the right face thereof. The casing 66 also has three switches 54a, 54b, and 54c of the mode setting section 54 at the back of the top face thereof and an AC code with an AC power plug C pulled out of the rear face.

In assembling of the device 1, as shown in Fig. 3, the connector 68 connected to the magnetron 31 and the connector 69 connected to the excitation coil 23 are connected to connectors (not shown) provided at the circuit block 10. Then, the receptacle 60 is inserted into the casing 66, whereupon the flange 61 provided at the receptacle 60 is brought into contact with and secured to an opening edge of the casing 66.

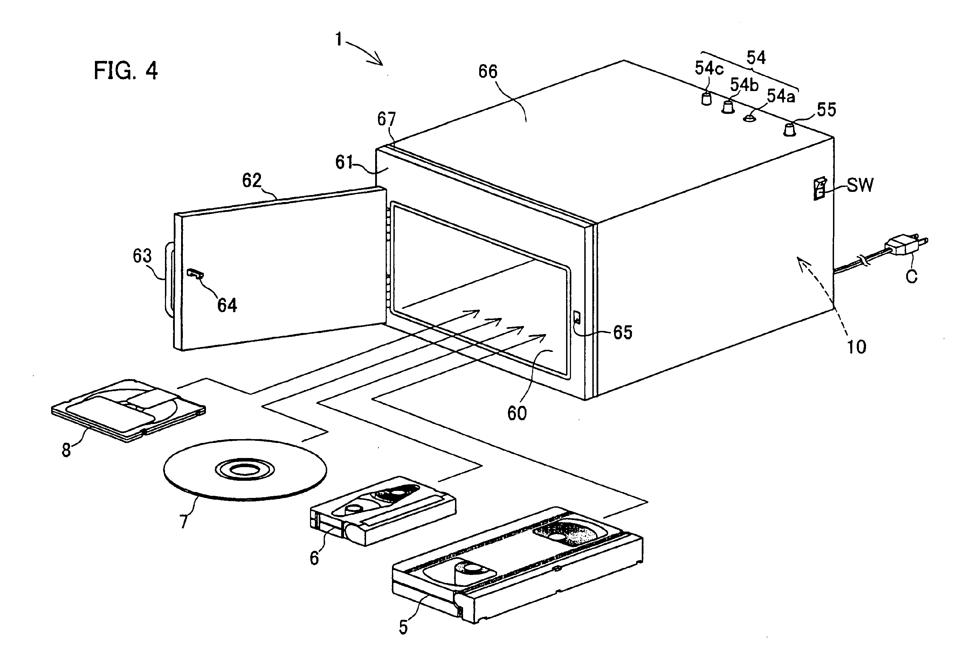

In the device 1 assembled in this way, as shown in Fig.4, the door 62 of the front face is openable and closable by grasping the handle 63, so that a data recording medium is readily taken in and out of the receptacle 60 by opening the door 62.

Next, operations of the device 1 for dealing with data recording media of the present embodiment will be described, making reference to Figs. 1 and 4. Operations for erasing magnetic data recorded in a VHS video tape 5, a magnetic recording medium, shown in Fig. 4 is first to be described.

First, the power switch SW is turned on and the magnetic field generating switch 54a of the mode setting section 54 is pushed in, so as to set to a magnetic field generating mode. Then, the door 62 is opened so that the VHS video tape 5 whose magnetic data is to be erased is accommodated in the receptacle 60. After the door 62 is closed, the operating switch 55 is pushed.

Upon operation of the operating switch 55, the controlling circuit 52 controls the charging contact 25, the exciting contact 24, and the contacts 27a and 27b of the polarity reversing section 27 of the magnetic field generating section 20 in reference to a closing state of the magnetic field generating switch 54a of the mode setting section 54. In the magnetic field generating mode, the heater current-carrying contact 36 and the anodal current-carrying contact 37 of the electromagnetic wave generating section 30 remain open.

The controlling circuit 52 switches both the contacts 27a and 27b of the polarity reversing section 27 to one side, so as to close the charging contact 25 for a predetermined period of time. Thereby, as described above, the capacitor 22 is charged until its charging voltage reaches the peak value of full-wave rectified voltage by the bridge diode 21. After a predetermined period of time from closure of the charging contact 25, the controlling circuit 52 opens the charging contact 25 followed by closure of the exciting contact 24. Thereupon, an electrical charge charged in the capacitor 22 is discharged via the excitation coil 23, to which the above-mentioned attenuating alternating current "i" shown in Fig. 2 is applied to generate an attenuating alternating magnetic field.

As shown in Fig. 3, the excitation coil 23 is wound around the receptacle 60 made of a non-magnetic material (copper plate), the outside of the receptacle 60 being covered with the outer casing 66 made of a magnetic material (iron plate), the front face of the receptacle 60 being covered with the door 62 made of a magnetic material (iron plate). Consequently, the attenuating alternating magnetic field generated in the excitation coil 23 is induced to the inner cavity of the receptacle 60 without attenuating at the receptacle 60 and magnetic field lines leaking out of the receptacle 60 are shielded by the casing 66, the flange 61, and the door 62.

Thereby, the attenuating alternating magnetic field is applied to the magnetic recording medium (VHS video tape 5) accommodated in the receptacle 60, thereby erasing recorded magnetic data.

After a predetermined period of time from closure of the exciting contact 24, the controlling circuit 52 opens the exciting contact 24 to complete this series of procedures for erasing magnetic data in the magnetic recording medium.

As just described, according to the device 1 of the present embodiment, after operation of the magnetic field generating switch 54a of the mode setting section 54 to set to the magnetic field generating mode, only operation of the operating switch 55 automatically erases magnetic data recorded in the VHS video tape 5, the magnetic recording medium, in a short period of time. Further, magnetic field lines leaking outside are minimized, preventing undesired effects associated with leaking magnetic field lines.

The description above illustrates by an example of the VHS video tape 5, but even in the case of an 8 mm video tape 6, one of similar magnetic recording media, erasure is performed by similar procedures.

The controlling circuit 52 makes reverse connection of the contacts 27a and 27b provided at the polarity reversing section 27 of the magnetic field generating section 20 every time of operations for the magnetic field generating mode. Specifically, discharge polarity from the capacitor 22 to the excitation coil 23 is reversed every time of operations for the magnetic field generating mode.

Consequently, even when a magnetic field is induced in the casing 66 made of a magnetic material by a magnetic field generated in the excitation coil 23, resulting in generation of mechanical repulsive force or attractive force between the coil 23 and the casing 66, the above-mentioned reverse connection by the polarity reversing section 27 reverses the mechanical forces in each operation. That prevents displacement of the coil 23 relative to the receptacle 60.

Operations for destroying data recorded in a DVD 7 shown in Fig. 4, an optical recording medium, is next to be described below.

First, the power switch SW is turned on and the electromagnetic wave generating switch 54b of the mode setting section 54 is pushed in, so as to set to an electromagnetic wave generating mode. Then, the door 62 is opened so that the DVD 7 whose data is to be destroyed is accommodated in the receptacle 60. After the door 62 is closed, the operating switch 55 is pushed.

Upon operation of the operating switch 55, the controlling circuit 52 controls the heater current-carrying contact 36 and the anodal current-carrying contact 37 of the electromagnetic wave generating section 30 in reference to a closing state of the electromagnetic wave generating switch 54b of the mode setting section 54. In the electromagnetic wave generating mode, the charging contact 25 and the exciting contact 24 of the magnetic field generating section 20 remain open.

The controlling circuit 52 closes the heater current-carrying contact 36 to heat the cathode (heater) 31a of the magnetron 31. That allows the cathode 31a to be ready to emit thermal electrons. After a predetermined period of time from closure of the heater current-carrying contact 36, the controlling circuit 52 closes the anodal current-carrying contact 37. Thereby, an anode voltage is applied to the anode 31b of the magnetron 31 from the voltage doubler rectifier circuit 38 to radiate a microwave of substantially 4.3 GHz from the antenna 31c to inside of the receptacle 60.

As shown in Fig. 3, since the receptacle 60 is made of a non-magnetic material (copper plate), the microwave of substantially 4.3 GHz radiated inside reflects on the inner surface of the receptacle 60, without leaking outside. Further, the front face of the receptacle 60 covered with the door 62 made of a magnetic material (iron plate) prevents the microwave radiated inside the receptacle 60 from leaking out. Still further, even in the unlikely event that the electromagnetic wave leaks out of the receptacle 60, the electromagnetic wave absorbing material 67 attached to the inner surface of the outer casing 66 and the rear face of the flange 61 absorbs the electromagnetic wave, thereby perfectly preventing the electromagnetic wave from leaking out of the casing 66.

The electromagnetic wave radiated in the receptacle 60 is applied to the DVD 7 accommodated therein, so as to deform by heat a vapor-deposited aluminum film or pits formed in the medium, achieving destruction of recorded data in a short period of time. As described above, the electromagnetic wave leaking out of the receptacle 60 is absorbed by the electromagnetic wave absorbing material 67, so that the electromagnetic wave leaking out of the device 1 is minimized.

After a predetermined period of time from closure of the anodal current-carrying contact 37, the controlling circuit 52 opens the anodal current-carrying contact 37 and the heater current-carrying contact 36 to complete this series of procedures for destroying data in the optical recording medium.

As just described, according to the device 1 of the present embodiment, after operation of the electromagnetic wave generating switch 54b of the mode setting section 54 to set to the electromagnetic wave generating mode, only operation of the operating switch 55 automatically destroys data recorded in the DVD 7, the optical recording medium, in a short period of time. Further, an electromagnetic wave leaking outside is minimized, never posing a danger to the human body.

Though the DVD 7 includes one having data recorded in one side and one having data recorded in both sides, the present embodiment makes it possible to destroy data recorded in both sides by just one application of the electromagnetic wave by appropriately setting a radiation output of electromagnetic wave even in the case of any kind of DVD 7. The description above illustrates by an example of the DVD 7, but even in the case of a CD 7, erasure is performed in a similar fashion.

Operations for erasing magnetic data recorded in an optical magnetic disk 8 shown in Fig. 4, a magnetic recording medium, is next to be described.

First, the power switch SW is turned on and the magnetic field and electromagnetic wave generating switch 54c of the mode setting section 54 is pushed in, so as to set to a magnetic field and electromagnetic wave generating mode. Then, the door 62 is opened so that the optical magnetic disk 8 whose data is to be erased is accommodated in the receptacle 60. After the door 62 is closed, the operating switch 55 is pushed.

Upon operation of the operating switch 55, the controlling circuit 52 controls the charging contact 25 and the exciting contact 24 of the magnetic field generating section 20 and also controls the heater current-carrying contact 36 and the anodal current-carrying contact 37 in reference to a closing state of the magnetic field and electromagnetic generating switch 54c of the mode setting section 54.

Specifically, setting to the magnetic field and electromagnetic wave generating mode by the mode setting section 54 simultaneously executes the magnetic field generating mode and the electromagnetic wave generating mode both described above by means of the controlling circuit 52, with the result that, to inside of the receptacle 60, the attenuating alternating magnetic filed is applied, whereas the microwave having a frequency of substantially 4.3 GHz is radiated.

Thereby, the optical magnetic disk 8 in the receptacle 60 is heated by the radiated microwave and degaussed by the applied attenuating alternating magnetic field in a short period of time, so that recorded magnetic data is erased. In the magnetic field and electromagnetic wave generating mode, as described above, magnetic field lines and an electromagnetic wave are prevented from leaking out of the device 1, so that safety is enhanced.

As just described, according to the device 1 of the present embodiment, after operation of the magnetic field and electromagnetic wave generating switch 54c of the mode setting section 54 to set to the magnetic field and electromagnetic wave generating mode, only operation of the operating switch 55 automatically erases data recorded in the optical magnetic disk 8 in a short period of time. Further, the electromagnetic wave leaking outside is minimized, never posing a danger to the human body.

In the magnetic field and electromagnetic wave generating mode, appropriate setting of a level of radiation of the electromagnetic wave erases magnetic data in the optical magnetic disk 8, but increased level of radiation of the electromagnetic wave also achieves destruction of data recorded in the optical disk 8 instead of erasure of magnetic data.

The description above illustrates the device 1 for dealing with data recording media, but the present invention is not limited to the above-mentioned embodiment, and may employ an additional configuration in safety and in operation.

For example, the above-mentioned embodiment only closes the door 62 with the hook 64 of the door 62 engaged with the engaging hole 65 of the flange 61. However, it is also possible to have a configuration provided with a detection switch at the engaging hole 65 so that the controlling circuit 52 forces to halt generation of a magnetic field and an electromagnetic wave while the door 62 is open. This configuration prevents a magnetic field or an electromagnetic wave from leaking outside even if the door 62 is opened by mistake while a data recording medium is dealt with, achieving further enhanced safety.

Further, for example, it is also possible to improve the usability by a configuration in which a pilot lamp is illuminated while either a magnetic field or an electromagnetic wave is outputted after operation of the operating switch 55.

Still further, the above-mentioned embodiment employs the controlling circuit 52 provided with the CPU that performs a digital processing, but the present invention is not limited thereto, and may have such a configuration that an electronic circuit controls each section. Further, each of the contacts of the magnetic field generating section 20 and the electromagnetic wave generating section 30 can be operated by hand instead of the controlling circuit 52.

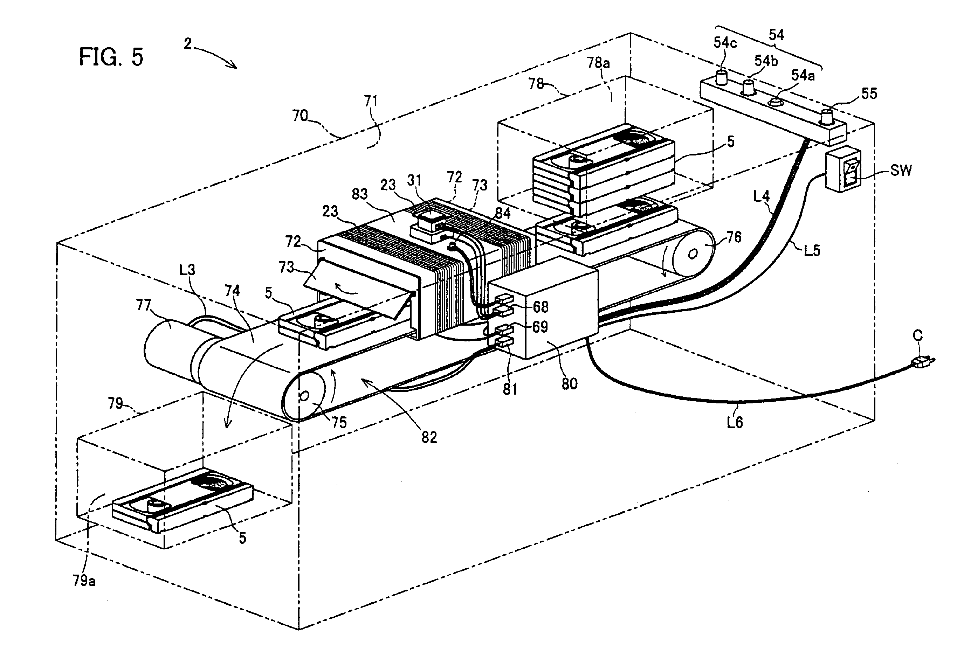

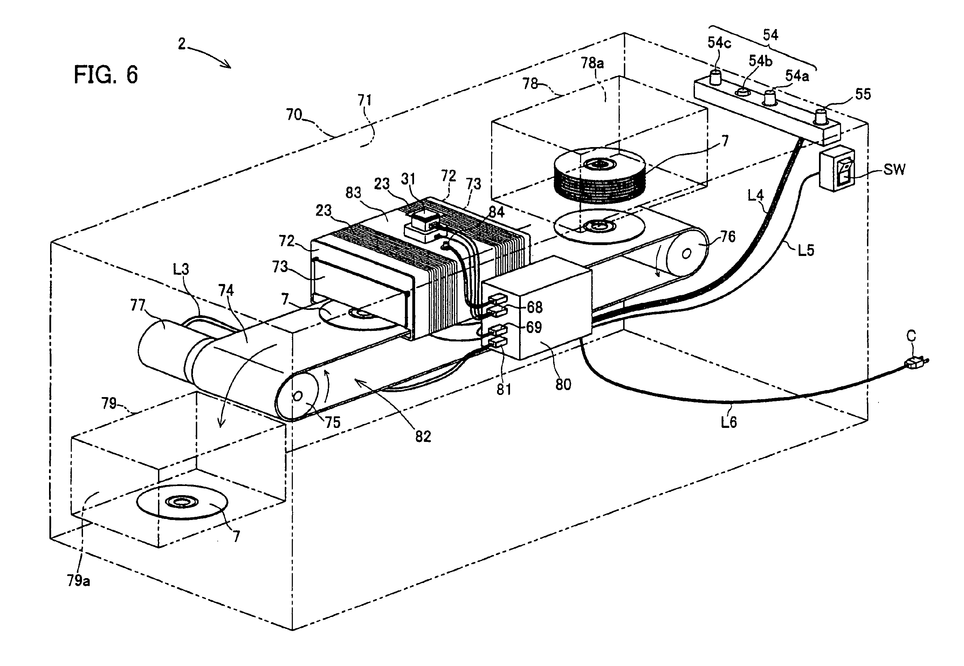

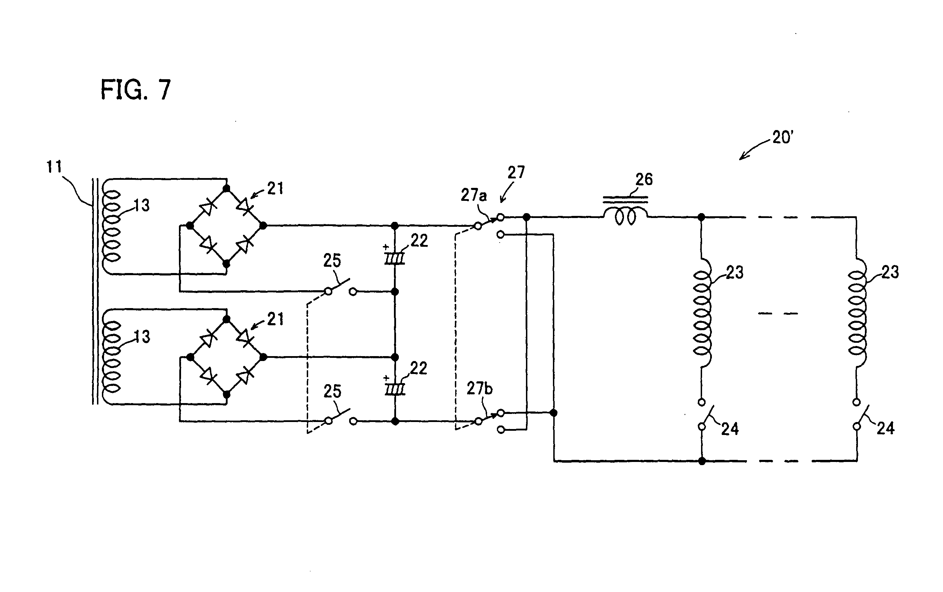

Now, a device 2 for dealing with data recording media relating to another embodiment of the present invention will be described. Fig. 5 is a perspective view showing an internal structure of the device 2 in a state in which a VHS video tape 5 is dealt with. Fig. 6 is a perspective view showing the internal structure of the device 2 in a state in which a DVD 7 is dealt with. Fig. 7 is a circuit diagram showing a modified example of the magnetic field generating section shown in Fig. 1.

The above-mentioned device 1 accommodates a data recording medium in the receptacle 60 every time to erase or destroy data. In contrast, the device 2 shown in Fig. 5 automatically erases or destroys data while conveying a plurality of data recording media.

A circuit configuration and a structure of the device 2 of the present embodiment will be described below. Herein, the same numerals are assigned to the same components as those of the above-mentioned device 1 and duplicated descriptions are omitted.

The device 2 of the present embodiment basically has the same circuit configuration as that of the above-mentioned device 1. However, as described above, a conveyor driving circuit 53 for driving a conveyor 82 is added to a controlling section 50 and a detection sensor 84 is added to a controlling circuit 52 in Fig. 1.

As shown in Fig. 5, the device 2 of the present embodiment has an internal structure completely different from that of the above-mentioned device 1. Specifically, the device 2 of the present embodiment includes the conveyor 82 for conveying data recording media extending through a receptacle 83, and doors 73 each made of a magnetic material and being openable and closable at a portion where the conveyor 82 extends through the receptacle 83.

More specifically, as well as the receptacle 60 shown in the above-mentioned embodiment, the receptacle 83 is made of a non-magnetic material (copper plate), but is a square-shaped cylinder having openings at its front and rear faces.

The receptacle 83 has a conveyor belt 74 having a width slightly narrower than the receptacle 83 therein adjacent to the bottom face of the receptacle 83 in parallel. The receptacle 83 also has shielding plates 72 secured to the openings at the front and rear faces thereof except the portions where the conveyor belt 74 is situated, to which plates 72 the doors 73 each having a width slightly narrower than the plate 72 are openably and closably attached with its lower ends being adjacent to the conveyor belt 74. These shielding plates 72 and the doors 73 each are made of iron that is a magnetic material.

The door 73 attached to the front face of the receptacle 83 opens outward, whereas the door 73 attached to the rear face of the receptacle 83 opens inward. These doors 73 and 73 each are lightly urged toward a closing position (vertical position) by means of an urging member (not shown), normally remaining closed.

Further, the detection sensor 84 is attached to the receptacle 83 for detecting presence of a data recording medium within the receptacle 83. The sensor 84, as shown in Fig. 5, penetrates through the top face of the receptacle 83 with a wiring extending from the sensor 84 connected to a circuit box 80. The present embodiment uses a light reflection sensor as the detection sensor 84.

The conveyor belt 74, as described above, is an endless belt having a width slightly narrower than the receptacle 83, spanned between a driving roller 75 positioned ahead of the receptacle 83 and a free roller 76 positioned behind the receptacle 83. Driving force of a motor 77 makes a rotary driving of the driving roller 75 in a counterclockwise direction, followed by a driving of the conveyor belt 74, and thus, the upper side of the conveyor belt 74 extending through the receptacle 83 moves forward.

A feeding tray 78 for feeding data recording media such as the VHS video tape 5 onto the conveyor belt 74 is located above the free roller 76 upstream of the conveyor 82. The feeding tray 78 is capable of accommodating a plurality of data recording media 5 and has such a structure as sequentially feeding by dropping the data recording media 5 at predetermined intervals. Further, an openable and closable door 78a made of a magnetic material (iron) is provided at the top of the feeding tray 78.

A containing tray 79 for containing dealt data recording media such as the VHS video tape 5 is positioned below the driving roller 75 at downstream site of the conveyor 82. Further, an openable and closable door 79a made of a magnetic material (iron) is provided at the front of the containing tray 79.

The circuit box 80 for incorporating the circuit block 10 shown in Fig. 1 is placed adjacent to the receptacle 83, a connector 69 connected to an excitation coil 23 and a connector 68 connected to a magnetron 31 being connected to the circuit box 80. A connector 81 provided at wirings L3 extending from the motor 77 is also connected to the circuit box 80.

The device 2 of the present embodiment has an outer casing 70 covering the whole components such as the receptacle 83, the conveyor 82, the feeding tray 78, the containing tray 79, and the circuit box 80. The outer casing 70 is a square-shaped box made of iron, a magnetic material, with an electromagnetic wave absorbing material 71 attached to its entire inner surface. The electromagnetic wave absorbing material 71 is the same rubber electromagnetic wave absorbing material as that of the above-mentioned embodiment.

The door 78a of the feeding tray 78 and the door 79a of the containing tray 79 are positioned at openings formed at the casing 70 and freely openable and closable, with the electromagnetic wave absorbing material 71 attached to the inner surfaces of these doors 78a and 79a.

The casing 70 is arranged with a power switch SW at the back of the right face thereof and switches 54a, 54b, and 54c of a mode setting section 54 and an operating switch 55 at the back of the top face thereof The power switch SW is connected to the circuit box 80 via a wiring L5, whereas the switches 54a, 54b, and 54c of the mode setting section 54 and the operating switch 55 each are connected to the circuit box 80 via wirings L4. An AC code L6 with an AC power plug C extends from the circuit box 80 to be pulled out of the rear face of the casing 70.

Next, operations of the device 2 having this configuration will be described, making reference to Figs. 1, 5, and 6. Operations for erasing magnetic data recorded in the VHS video tape 5, the magnetic recording medium, shown in Fig. 5, is first to be described.

First, the door 78a of the feeding tray 78 is opened so that a plurality of VHS video tapes 5 are stacked therewithin. Then, the power switch SW is turned on and the magnetic field generating switch 54a of the mode setting section 54 is pushed in, so as to set to a magnetic field generating mode.

Then, the operating switch 55 is pushed. Upon operation of the operating switch 55, the controlling circuit 52 controls the motor driving circuit 53 to drive the motor 77, thereby starting conveyance by the conveyor 82. Then, the VHS video tape 5 dropped onto the conveyor belt 74 from the feeding tray 78 is conveyed by the conveyor 82, pushes the door 73 to open it, and moves into the receptacle 83. When the VHS video tape 5 is conveyed into the receptacle 83, the door 73 is automatically closed by an urging force.

When the VHS video tape 5 is conveyed into the receptacle 83 and the detection sensor 84 detects the VHS video tape 5, the controlling circuit 52 halts the driving of the motor 77 once. Then, the controlling circuit 52 controls opening and closing of a charging contact 25 and an exciting contact 24 of a magnetic field generating section 20 in reference to a closing state of the magnetic field generating switch 54a of the mode setting section 54 to apply an attenuating alternating magnetic field to the VHS video tape 5. Herein, the magnetic field generating section 20 is controlled in a manner similar to that shown in the above-mentioned embodiment, and thus the description is omitted.

When application of the attenuating alternating magnetic field is finished, the controlling circuit 52 restarts the driving of the motor 77 to convey the VHS video tape 5 downstream. The VHS video tape 5 conveyed by the conveyor 82 pushes the door 73 at downstream site thereof to open it and moves out of the receptacle 83. When the VHS video tape 5 is conveyed out of the receptacle 83, the door 73 automatically closes by an urging force. Then, the VHS video tape 5 conveyed downstream is dropped from the conveyor 82 to be contained in the containing tray 79.

Repetition of the above-mentioned controlling sequentially erases magnetic data in the VHS video tapes 5 accommodated in the feeding tray 78 in a batch system.

Herein, as described above, since the device 2 is entirely covered with the casing 70 made of a magnetic material (iron). Consequently, the casing 70 prevents the attenuating alternating magnetic field generated in the excitation coil 23 from leaking outside, thereby completely shielding leakage of magnetism outside during the procedures.

Operations for destroying data recorded in the DVD 7, an optical recording medium, are next to be described, making reference to Fig. 6.

First, the door 78a of the feeding tray 78 is opened so that a plurality of DVDs 7 are stacked therewithin. Then, the power switch SW is turned on and the electromagnetic wave generating switch 54b of the mode setting section 54 is pushed in, so as to set to an electromagnetic wave generating mode.

Then, the operating switch 55 is pushed. Upon operation of the operating switch 55, the controlling circuit 52 controls the motor driving circuit 53 to drive the motor 77, thereby starting conveyance by the conveyor 82. Then, the DVD 7 dropped on the conveyor belt 74 from the feeding tray 78 is conveyed by the conveyor 82. Herein, the DVD 7 is so light as to have difficulty opening the door 73 by its own weight. Consequently, the present embodiment makes a gap between the lower end of the door 73 attached to the receptacle 83 and the conveyor belt 74 slightly larger than the thickness of the DVD 7. Thereby, the DVD 7 conveyed by the conveyor 82 moves into the receptacle 83 without touching the door 73.

When the DVD 7 is conveyed into the receptacle 83 and the detection sensor 84 detects the DVD 7, the controlling circuit 52 halts the driving of the motor 77 once. Then, the controlling circuit 52 controls opening and closing of a heater current-carrying contact 36 and an anodal current-carrying contact 37 of an electromagnetic wave generating section 30 in reference to a closing state of the electromagnetic wave generating switch 54b of the mode setting section 54 to apply an electromagnetic wave (microwave) to the DVD 7. Herein, the electromagnetic wave generating section 30 is controlled in a way similar to that shown in the above-mentioned embodiment, and thus the description is omitted.

When application of the electromagnetic wave is finished, the controlling circuit 52 restarts the driving of the motor 77 to convey the DVD 7 downstream. The DVD 7 conveyed by the conveyor 82 moves through a gap between the door 73 at downstream site and the conveyor belt 74 out of the receptacle 83. The DVD 7 conveyed downstream is dropped from the conveyor 82 to be contained in the containing tray 79.

Repetition of the above-mentioned controlling sequentially destroys data recorded in the DVDs 7 accommodated in the feeding tray 78 in a batch system.

Herein, as described above, the device 2 of the present embodiment has the receptacle 83 made of a non-magnetic material (copper) and the shielding plates 72 and the doors 73 attached to the front and rear faces of the receptacle 83 each made of a magnetic material (iron). Further, portions where the conveyor belt 74 extends through the receptacle 83, that is, the gaps at the lower ends of the doors 73 are small enough compared to a wave length (7cm) of the electromagnetic wave. Consequently, the electromagnetic wave radiated in the receptacle 83 is shielded by the receptacle 83, the shielding plates 72, and the doors 73, thereby hardly leaking out of the receptacle 83. Further, since the electromagnetic wave absorbing material 71 is attached to the inner surface of the casing 70 covering the entire device, even in the event that a part of the electromagnetic wave leaks out of the receptacle 83, the electromagnetic wave absorbing material 71 absorbs it, thereby completely preventing leaking out of the device. Thereby, optical recording media are efficiently dealt with, without undesired effects to the human body associated with leakage of a microwave.

Operations for dealing with the magnetic recording media (VHS video tapes) 5 and the optical recording media (DVDs) 7 by means of the device 2 are described above. Herein, in the case of dealing with optical magnetic disks 8, the detailed description is omitted because operations are performed in a way similar to that in the above-described embodiment except for an operation of the magnetic field and electromagnetic wave generating switch 54c.

Herein, the device 2 of the present embodiment applies procedures in such a batch system as to halt conveyance by the conveyor 82 once at the moment when a data recording medium is accommodated in the receptacle 83 so that a magnetic field or an electromagnetic wave is applied thereto. However, the present invention may employ such a continuous system as to apply a magnetic field or an electromagnetic wave while data recording media are continuously conveyed by the conveyor 82, in addition to such a batch system.

Further, the present embodiment radiates an electromagnetic wave of substantially 4.3 GHz, but may use an electromagnetic wave of a microwave band of 300 MHz to 300 GHz. Still further, the use of a magnetron of 2.45 GHz employed for a household microwave oven can provide cost saving.

The configurations and the operations of the devices 1 and 2 for dealing with data recording media relating to the embodiments of the present invention are detailed above, but the devices 1 and 2 are not limited to the configurations illustrated in the above-mentioned embodiments, but may also employ other embodiments.

For example, the magnetic field generating section 20 shown in Fig. 1 may employ a circuit configuration of a magnetic field generating section 20' shown in Fig. 7.

The magnetic field generating section 20' shown in Fig. 7 includes a power transformer 11, two secondary windings 13 and 13, and two circuits each composed of a bridge diode 21, a capacitor 22, and a charging contact 25, and charges the capacitors 22 connected in series. This configuration keeps a charged voltage of each capacitor 22 low, while obtaining high voltage between the both ends of the capacitors 22 and 22 connected in series. Thus, while a voltage of the secondary winding 13 of the power transformer 11 and a withstand voltage of the capacitor 22 are kept low, a high voltage is applied to an excitation coil 23 to generate a magnetic field having a high magnetic flux density. Thereby, general-purpose components can be used to constitute a circuit that generates a strong magnetic field, and thus, cost saving can be provided.

In order to further increase a voltage applied to the excitation coil 23, it is possible to employ a circuit configuration provided with three groups or more each composed of the secondary winding 13 of the power transformer 11, the bridge diode 21, and the capacitor 22.

In the case that an object to be dealt with, to which a magnetic field is applied, is large, it is possible to employ a configuration provided with a plurality of excitation coils 23 and exciting contacts 24, as shown in Fig. 7. According to this configuration, a voltage charged to the capacitor 22 is sequentially applied to each of the excitation coils 23 to fractionally apply an attenuating alternating magnetic field to the large object. Thereby, while a required strength of the magnetic field is maintained, it is possible to employ a circuit configuration using general-purpose components.

The above-mentioned embodiments, as shown in Fig. 1, apply the voltage doubler rectifier circuit 38 to the electromagnetic wave generating section 30, but may apply a rectifier circuit of a tripler voltage or more thereto.

Further, the above-mentioned embodiment has such a configuration as generating the attenuating alternating magnetic field at the magnetic field generating section 20, but the present invention is not limited thereto, and for example, may have such a configuration as keeping a magnetic field having a predetermined strength to be generated for a predetermined period of time. According to this configuration, the applied magnetic field randomizes a magnetic orientation of a magnetic data recording medium, so that it is equivalent to prevent original data from being read out.

Still further, the above-mentioned embodiments illustrate devices for dealing with magnetic recording media such as the VHS video tape 5, the 8mm video tape 6, or the magnetic disk (MO) 8 or optical recording media such as the DVD 7 or the CD 7, but the present invention is not limited to dealing with these data recording media. For example, appropriate setting of strength of a magnetic field to be generated or a range of magnetic field generation allows a device to erase magnetic data in a hard disk drive or a large magnetic tape for use in a general-purpose computer. It is also possible to have such a configuration that a computer incorporating a hard disk is directly accommodated in the receptacle 60 or 83 so that magnetic data recorded in the hard disk is erased.

Next, devices 3 and 4 for dealing with data recording media relating still other embodiments of the present invention will be described below.

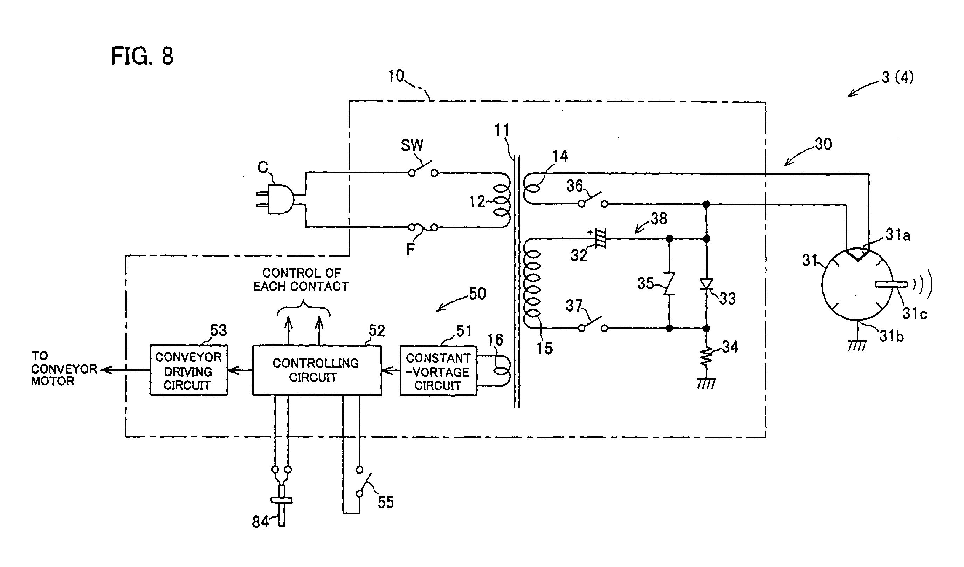

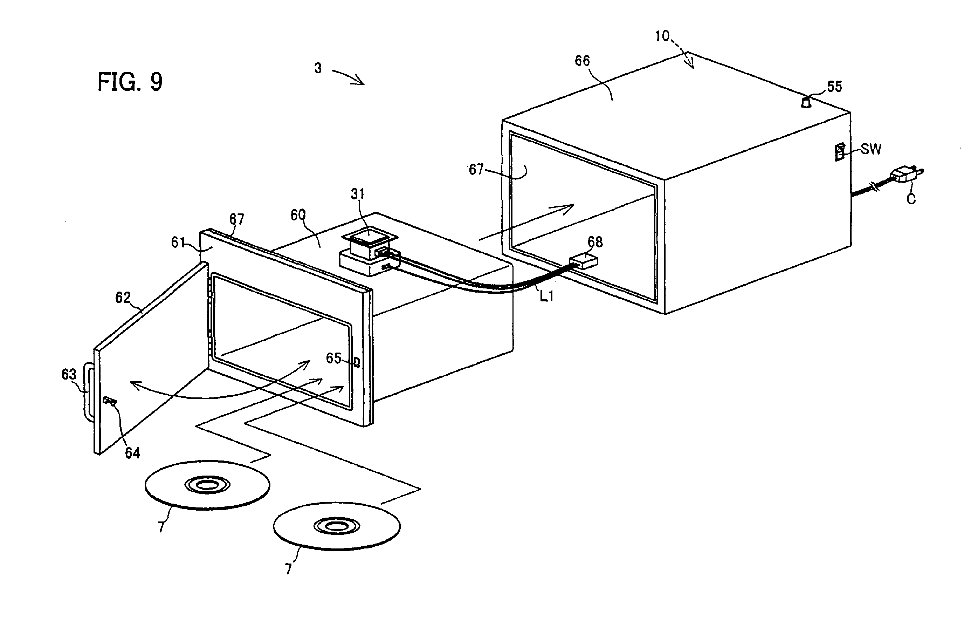

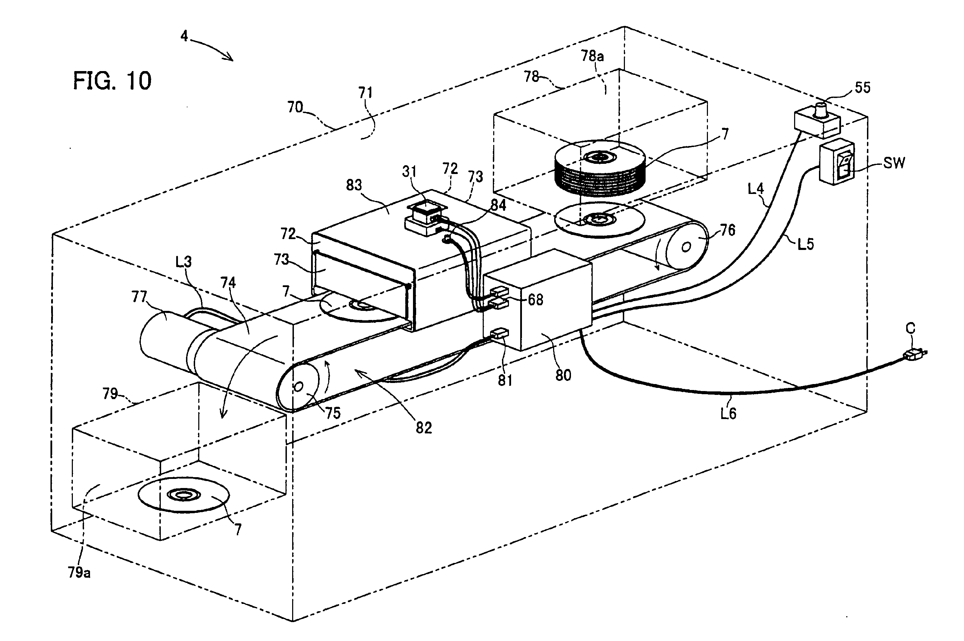

Fig. 8 is a basic circuit diagram of the devices 3 and 4. Fig. 9 is an exploded perspective view showing a structure of the device 3. Fig. 10 is a perspective view showing an internal structure of the device 4 in a state in which the DVD 7 is dealt with.

The device 3 of the present embodiment has a configuration with a part of the device 1 shown in Figs 1 to 4 modified. The device 4 of the present embodiment has a configuration with a part of the device 2 shown in Figs 1, 5, and 6 modified. Thus, the same numerals are assigned to the same components, and the duplicated descriptions are omitted.

The device 3 of the present embodiment, as shown in Fig. 8, is mainly composed of an electromagnetic wave generating section 30, a controlling section 50, and a power transformer 11 for supplying an AC power source to each of these sections. Specifically, the device 3 of the present embodiment has a circuit configuration of the above-mentioned device 1 shown in Fig. 1 except a magnetic field generating section 20.

The electromagnetic wave generating section 30, as shown in Fig. 8, has the same circuit configuration as that of the electromagnetic wave generating section 30 of the above-mentioned device 1 (see Fig. 1). Further, the power transformer 11 has a configuration of the power transformer 11 of the above-mentioned device 1 (see Fig. 1) except a secondary winding 13.

The controlling circuit 50, as shown in Fig. 8, includes a constant-voltage circuit 51 and a controlling circuit 52, and has a function of controlling opening and closing of each contact provided at the electromagnetic wave generating section 30. Herein, a conveyor driving circuit 53 and a detection sensor 84 connected to the controlling circuit 52 are employed in the device 4 described below, and thus, the description of these configurations will be described below.

The constant-voltage circuit 51 is a circuit adapted to supply a stabilized DC voltage to the controlling circuit 52 upon receipt of an AC voltage of a secondary winding 16 of the power transformer 11.

The controlling circuit 52 is a circuit capable of a digital control provided with a CPU, to which circuit 52 an operating switch 55 is connected. Further, the controlling circuit 52 has a configuration capable of separately controlling opening and closing of two contacts according to program manipulations, the contacts being respectively connected to a heater current-carrying contact 36 and an anodal current-carrying contact 37 of the electromagnetic wave generating section 30.

The controlling circuit 52 has functions of performing program manipulations in response to an operation of the operating switch 55 so as to generate an electromagnetic wave by an opening and closing control of each of the contacts of the electromagnetic wave generating section 30 and of driving a discharger 58 described below by controlling a discharge driving circuit 57.

The device 3 of the present embodiment has the electromagnetic wave generating section 30 and the controlling section 50 having the functions described above, and a circuit block 10 specified by a dashed line in Fig. 8 is integrally formed on a circuit board or the like.

Next, a structure of the device 3 will be described, making reference to Fig. 9. The device 3 of the present embodiment basically has the same structure as that of the above-mentioned device 1 (see Fig. 3), parts described below being different therefrom.

Specifically, the above-mentioned device 1 has the receptacle 60 made of a non-magnetic material (copper) with the magnetron 31 secured to its central part of the top face, around which receptacle 60 the excitation coil 23 is wound in such a manner as sandwiching the magnetron 31 from both front and rear.

In contrast, the device 3 of the present embodiment has a receptacle 60 made of a magnetic material (iron) with only a magnetron 31 secured to its central part of the top face.

Further, a casing 66 is provided with only the operating switch 55 at the back of the top face thereof.

When the device 3 is assembled, as shown in Fig. 9, a connector 68 connected to the magnetron 31 is connected to a connector (not shown) provided at the circuit block 10, and the receptacle 60 is inserted into the casing 66, whereupon a flange 61 provided at the receptacle 60 is brought into contact with and secured to the opening edge of the casing 66.

The device 3 assembled in this way radiates a microwave of substantially 4.3 GHz into the receptacle 60 for a predetermined period of time by an operation of the operating switch 55.

Consequently, a door 62 is opened, a DVD 7 or a CD7 whose data is to be destroyed is accommodated in the receptacle 60, the door 62 is closed, and then the operation switch 55 is only pushed, so that data recorded in the accommodated DVD 7 or CD 7 is efficiently destroyed in a short period of time. Specifically, the same controlling as in the case of closing of the electromagnetic wave generating switch 54b of the mode setting section 54 in the above-mentioned device 1 shown in Fig. 4 efficiently destroys data recorded in the DVD 7 or the CD 7.

Next, the device 4 for dealing with data recording media will be described.

The device 3 of the above-mentioned embodiment destroys the DVD 7 or the CD 7 which is accommodated in the receptacle 60 every time. In contrast, the device 4 shown in Fig. 10 destroys a plurality of data recording media automatically while conveying the media.

The device 4 of the present embodiment basically has the same circuit configuration as that of the above-mentioned device 3. However, in Fig. 8, a conveyor driving circuit 53 for driving a conveyor 82 is added to a controlling section 50, and a detection sensor 84 is additionally connected to a controlling circuit 52.

An internal structure of the device 4 of the present embodiment, as shown in Fig. 10, is basically the same as that of the above-mentioned device 2 (see Fig. 5).

However, a receptacle 83 is provided with only a magnetron 31 except an excitation coil 23.

Further, an outer casing 70 has an operating switch 55 at the back of the top face thereof, which switch 55 is connected to a circuit box 80 via a wiring L4.

In the device 4, the same controlling as in the case of closing of the electromagnetic wave generating switch 54b of the mode setting section 54 in the above-mentioned device 2 shown in Fig. 6 continuously and efficiently destroys data recorded in the DVD 7 or the CD 7.

Each of the above-mentioned devices for dealing with data recording media accommodates singly a recording medium such as a video tape, a hard disk, or a DVD to destroy the medium, but may accommodate an electronic device incorporating the recording medium to destroy data recorded in the recording medium. Specifically, each of the above-mentioned devices is utilized as a device for disposing of electronic devices without any modification.

An embodiment in the case of the use of the device for dealing with data recording media as a device for disposing of electronic devices will be described below.

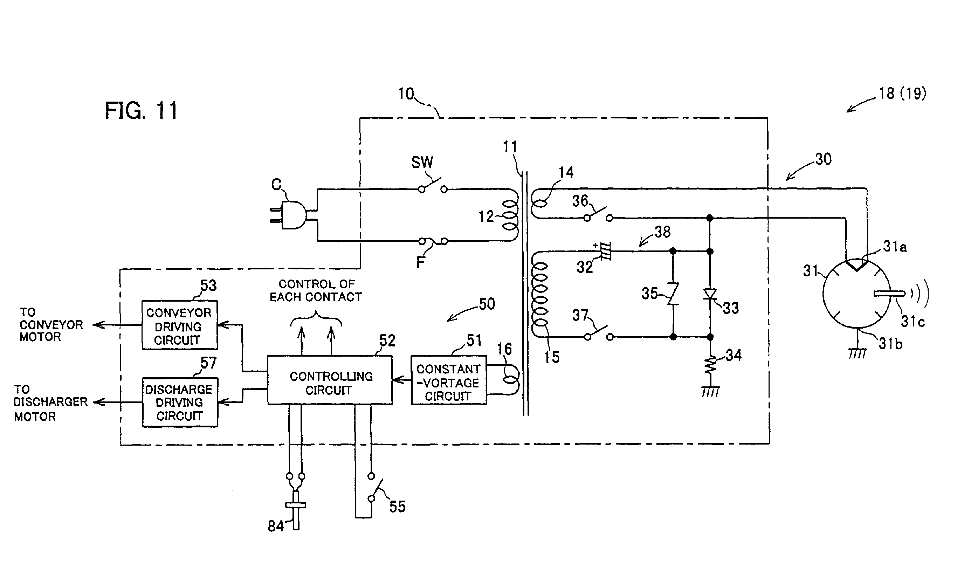

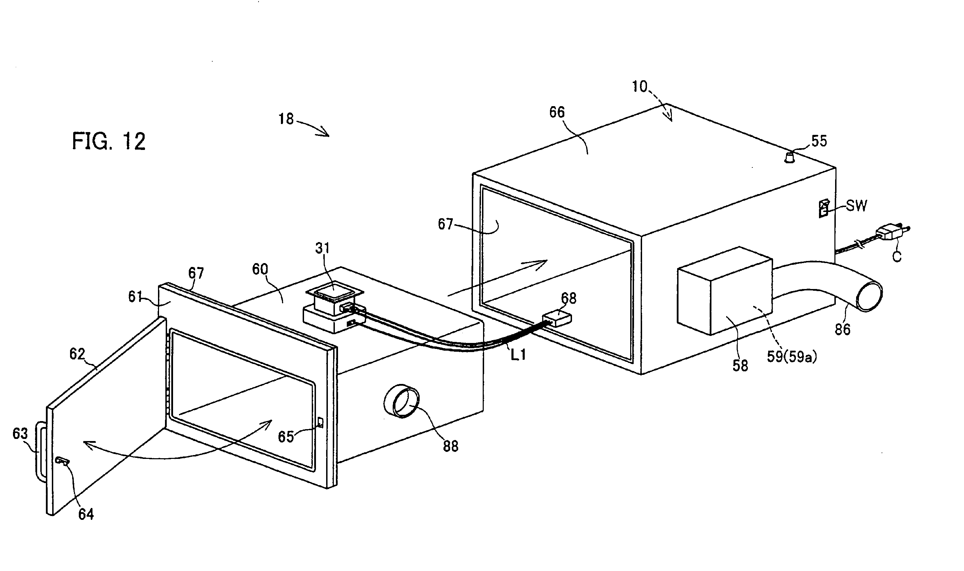

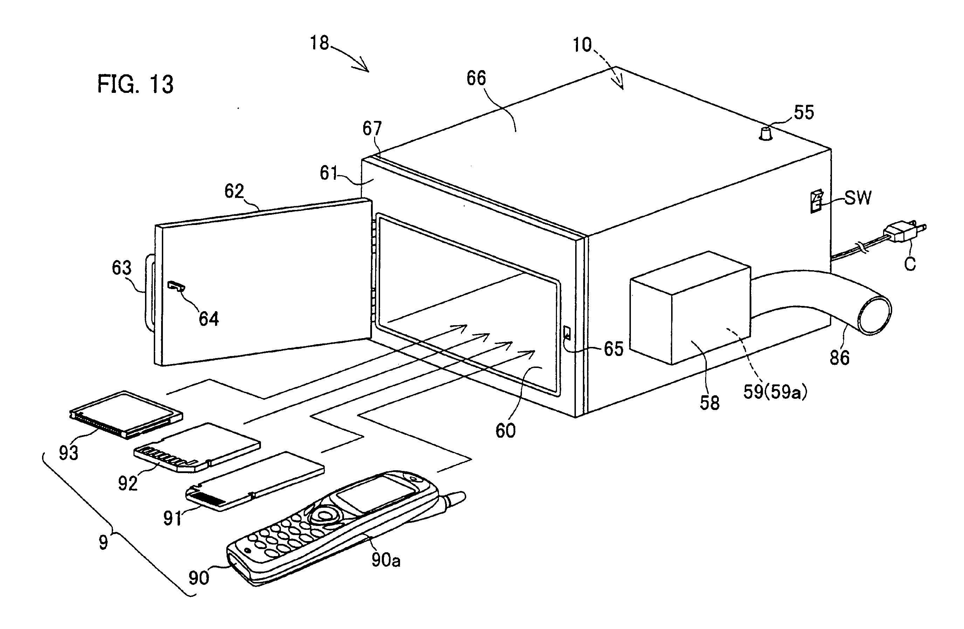

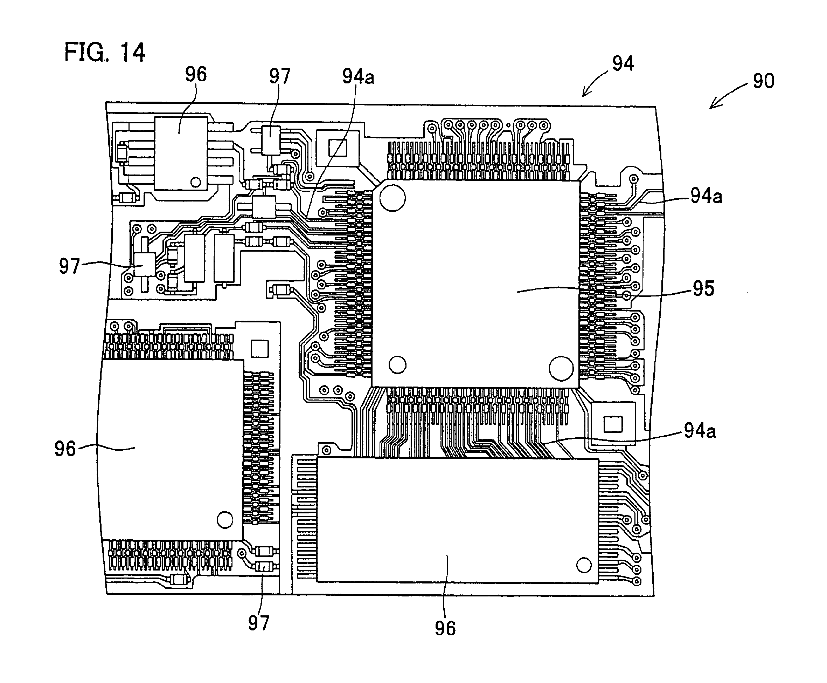

Fig. 11 is a basic circuit diagram of a device 18 for disposing of electronic devices of the present embodiment. Fig. 12 is an exploded perspective view showing an internal structure of the device 18 shown in Fig. 11. Fig. 13 is a perspective view of the device 18. Fig. 14 is a diagram illustrating an example of a printed circuit board installed in an electronic device.

The device 18 for disposing of electronic devices of the present embodiment has a configuration with a part of the device 1 for dealing with data recording media shown in Figs. 1 and 3 modified. Thus, the same numerals are assigned to the same components, and the duplicated descriptions are omitted.

The device 18 of the present embodiment, as shown in Fig. 11, is mainly composed of an electromagnetic wave generating section 30, a controlling section 50, and a power transformer 11 for supplying an AC power source to each of these sections. Specifically, the device 18 of the present embodiment has a circuit configuration of the above-mentioned device 1 shown in Fig. 1 except a magnetic field generating section 20.

The electromagnetic field generating section 30, as shown in Fig. 11, has the same circuit configuration as that of the electromagnetic wave generating section 30 of the above-mentioned device 1 (see Fig. 1). Further, the power transformer 11 has a configuration of the power transformer 11 of the above-mentioned device 1 (see Fig. 1) except a secondary winding 13.

The controlling circuit 50, as shown in Fig. 11, includes a constant-voltage circuit 51, a controlling circuit 52, and a discharge driving circuit 57, and has functions of controlling opening and closing of each contact provided at the electromagnetic wave generating section 30 and of controlling of a discharger 58 described below. Herein, a conveyor driving circuit 53 and a detection sensor 84 connected to the controlling circuit 52 are employed in another embodiment described below, and thus, the description of these configurations will be described below.

The constant-voltage circuit 51 is a circuit adapted to supply a stabilized DC voltage to the controlling circuit 52 upon receipt of an AC voltage of a secondary winding 16 of the power transformer 11.

The controlling circuit 52 is a circuit capable of a digital control provided with a CPU, to which circuit 52 the operating switch 55 is connected. Further, the controlling circuit 52 has a configuration capable of Separately controlling opening and closing of two contacts according to program manipulations, the contacts being respectively connected to a heater current-carrying contact 36 and an anodal current-carrying contact 37 of the electromagnetic wave generating section 30.

The controlling circuit 52 has functions of performing program manipulations in response to an operation of the operating switch 55 so as to generate an electromagnetic wave by an opening and closing control of each of the contacts of the electromagnetic wave generating section 30 and of driving the discharger 58 described below by controlling the discharge driving circuit 57.

The device 18 of the present embodiment has the electromagnetic wave generating section 30 and the controlling section 50 having the functions described above, and a circuit block 10 specified by a dashed line in Fig. 11 is integrally formed on a circuit board or the like.

Next, a structure of the device 18 will be described, making reference to Fig. 12. The device 18 of the present embodiment basically has the same structure as that of the above-mentioned device 1 (see Fig. 3), parts described below being different therefrom.

Specifically, the above-mentioned device 1 has the receptacle 60 made of a non-magnetic material (copper) with the magnetron 31 secured to its central part of the top face, around which receptacle 60 the excitation coil 23 is wound in such a manner as sandwiching the magnetron 31 from both front and rear.

In contrast, the device 18 of the present embodiment has a receptacle 60 made of a magnetic material (iron) with only a magnetron 31 secured to its central part of the top face and with a circular opening at the right face thereof so that a short discharge duct 88 is attached to the opening.

A casing 66 has on the right face thereof the discharger 58 having a discharge fan 59a driven by a motor 59, to which discharger 58 a discharge pipe 86 is connected. The casing 66 has only an operating switch 55 at the back of the top face thereof. Herein, as the device 18 of the present invention has the same configuration as the above-mentioned device 1 (see Fig. 3) except the above-mentioned configuration, the same numerals are assigned and the duplicated descriptions are omitted.

When the device 18 is assembled, as shown in Fig. 12, a connector 68 connected to the magnetron 31 is connected to a connector (not shown) provided at the circuit block 10, and the receptacle 60 is inserted into the casing 66, whereupon a flange 61 provided at the receptacle 60 is brought into contact with and secured to the opening edge of the casing 66. When the device 18 is assembled in this way, a discharge duct 88 provided on the receptacle 60 is situated adjacent to a discharge fan 59a of the discharger 58 provided on the casing 66. Therefore, a rotary driving of the discharge fan 59a by a motor 59 provides negative pressure inside of a discharge pipe 86 relative to inside of the receptacle 60, so that air within the receptacle 60 is introduced into the discharge pipe 86.

Next, operations of the device 18 of the present embodiment will be described, making reference to Figs. 11 and 13.

First, a power switch SW is turned on and a door 62 is opened so that an electronic device 9 to be destroyed is accommodated in the receptacle 60. The electronic device 9 to be destroyed includes, for example, a cell phone 90 incorporating a memory device (integral circuit) therein, and further includes various types of memory cards such as a memory stick (registered trade mark of Sony Co., Ltd.) 91, a SD memory card (trade mark of Matsushita Electric Industrial Co., Ltd., et.al.) 92, or a compact flash (trade mark of SanDisk Corporation in the U.S.) 93. Still further, the cell phones 90 with these memory cards 91 to 93 attached to external slots thereof are exemplified. An electronic device such as an IC card incorporating an IC chip (not shown) may be accommodated.

After these electronic devices 9 to be destroyed are accommodated in the receptacle 60, the door 62 is closed and the operating switch 55 is pushed.

Upon operation of the operating switch 55, the controlling circuit 52 closes the heater current-carrying contact 36 so as to heat a cathode (heater) 31a of the magnetron 31, and whereby the cathode 31a becomes ready for thermal electron emission. After a predetermined period of time from closure of the heater current-carrying contact 36, the controlling circuit 52 closes the anodal current-carrying contact 37. Thereby, an anodal voltage is applied from a voltage doubler rectifier circuit 38 to an anode 31b of the magnetron 31, so as to radiate a microwave of substantially 2.45 GHz from an antenna 31c to inside of the receptacle 60.

When the operating switch 55 is operated, the controlling circuit 52 further outputs a controlling signal to the discharge driving circuit 57 to start driving of the motor 59 of the discharger 58, whereby air within the receptacle 60 is discharged outside via the discharge pipe 86.

Herein, as shown in Fig.12, since the receptacle 60 is made of a magnetic material (iron), the microwave radiated therewithin is reflected by the inner surface of the receptacle 60 without leaking outside. Further, the front face of the receptacle 60 is covered with the door 62 made of a magnetic material (iron plate), thereby preventing the microwave radiated within the receptacle 60 from leaking outside. Still further, even in the event of leaking out of the receptacle 60, an electromagnetic wave is absorbed by an electromagnetic wave absorbing material 67 attached to the inner surface of the casing 66 and the back face of the flange 61, so that the electromagnetic wave is completely prevented from leaking out of the casing 66.

The electromagnetic wave radiated in the receptacle 60 is radiated to the electric devices 9 accommodated therein. In the case of the cell phone 90 among the electronic devices 9 to which the electromagnetic wave is radiated, the cell phone 90, as shown in Fig. 14, has a printed circuit board 94 secured to inside thereof and mounting a memory integrated circuit (memory device) 95, integrated circuits 96 for controlling, and circuit members 97. The printed circuit board 94 has a number of printed wirings 94a formed thereon that mutually connect the integrated circuits 95 and 96 and the circuit members 92.

When an electromagnetic wave is radiated to the cell phone 90 having such printed circuit board 94, a magnetic field of the electromagnetic wave is interlinked with the printed wirings 94a to induce a high voltage. Thus, the high voltage induced in the printed wirings 94a on the printed circuit board 94 brings breaking or short circuit of the printed wirings 94a, and the high voltage is applied also to the circuit members 97 mounted on the printed circuit board 94, bringing dielectric breakdown (or destruction of insulator) as well. Further, the high voltage induced in a wiring pattern within the integrated circuits 95 and 96 brings breaking or short circuit of the wiring pattern, and the high voltage is applied to a transistor element or a capacitor element within the integrated circuits, bringing dielectric breakdown as well.

Consequently, radiation of an electromagnetic wave brings breaking or short circuit of the printed wirings 94a on the printed circuit board 94 installed in the cell phone 90, resulting in precluding proper circuit operations. Further, the circuit members 97 mounted on the printed circuit board 94 become inoperative because of dielectric breakdown. Still further, the wiring patterns of the memory integrated circuit (memory device) 95 or the integrated circuits 96 for controlling mounted on the printed circuit board 94 are broken or short-circuited, becoming inoperative because of dielectric breakdown of the transistor element or the capacitor element. When a device such as a LCD instrument is installed in the cell phone 90, the device is broken because internal wirings of the LCD instrument are broken or short-circuited.

As to the memory cards 91 to 93 accommodated in the receptacle 60, as well as the cell phone 90, printed wirings or memory devices on a printed circuit board installed in the card are broken. Further, even in the case of a memory card installed in the cell phone 90, printed wirings or memory devices on a printed circuit board installed in the memory card are broken.

Even if heating of a casing body 90a or the printed circuit board 94 of the cell phone 90 caused by radiation of an electromagnetic wave generates gas, the discharger 58 discharges the gas out through the discharge pipe 86. Thereby, the gas does not stay within the receptacle 60, and thus, does not produce foul odors.

After a predetermined period of time from closure of the anodal current-carrying contact 37, the controlling circuit 52 opens the anodal current-carrying contact 37 and the heater current-carrying contact 36 to complete a series of disposal of electronic devices.

Herein, a radiation output and a radiation time of a microwave by the magnetron 31 can be appropriately set in response to the volume of the electronic devices 9 accommodated in the receptacle 60. Alternatively, combination of fixed setting of the radiation output and variable setting of the radiation time of the microwave is also possible.

In this way, according to the device 18 of the present embodiment, only operation of the operating switch 55 efficiently destroys the electronic devices 9 such as the cell phone 90 or the memory cards 91 to 93 accommodated in the receptacle 60 in a short period of time to prevent stored data from being read out. Thereby, it is possible to efficiently perform disposal procedures in a short period of time while data stored in the electronic devices 9 collected in large amounts is prevented from leaking out with ensuring security.

Further, even if gas generates from heated resin materials associated with radiation of an electromagnetic wave, the discharger 58 discharges the gas out, thereby preventing the gas staying in the receptacle 60 from diffusing in disposal stations and from producing foul odors. Still further, the gas discharged out can be treated with deodorization or removal of toxic substances so as to be released in the atmosphere.

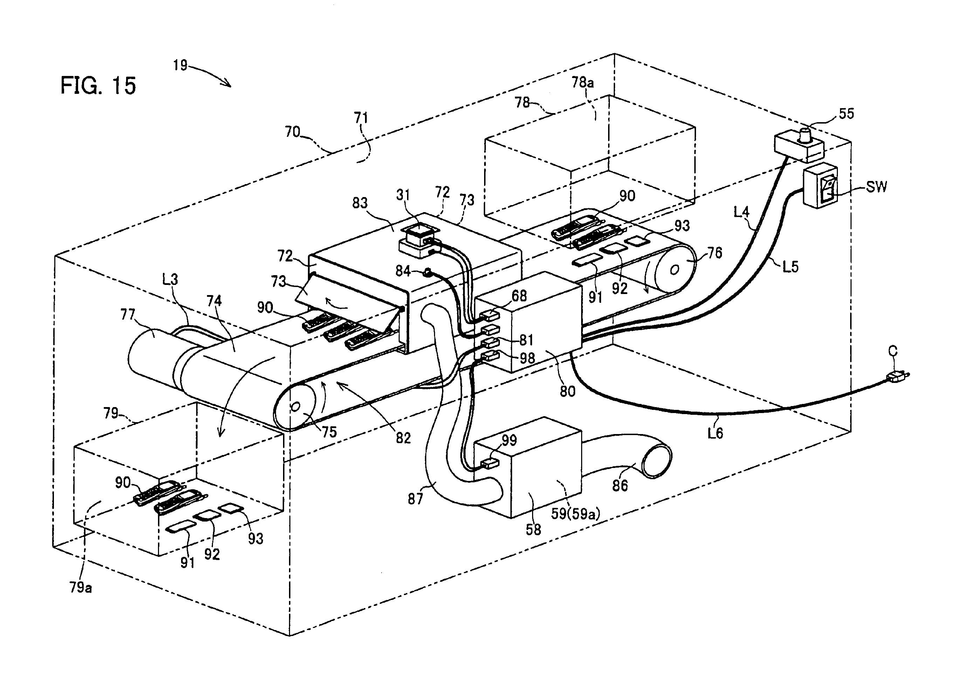

Next, a device 19 for disposing of electronic devices relating to yet another embodiment of the present invention will be described. Fig. 15 is a perspective view showing an internal structure of the device 19.

The device 18 of the above-mentioned embodiment destroys the electronic device 9 that is accommodated in the receptacle 60 every time. In contrast, the device 19 shown in Fig. 15 destroys a plurality of electronic devices 9 automatically while conveying the devices 9.

A circuit configuration and a structure of the device 19 of the present embodiment will be described below. The device 19 of the present embodiment has the circuit configuration of the above-mentioned device 18 and the structure of the above-mentioned device 2 (see Fig. 5) with partly modified.

The device 19 of the present embodiment basically has the same circuit configuration as that of the above-mentioned device 18. However, in Fig. 11, a conveyor driving circuit 56 for driving a conveyor 82 is added to a controlling section 50, and a detection sensor 84 is additionally connected to a controlling circuit 52. The detection sensor 84 is the same as the detection sensor 84 for use in the above-mentioned device 2 (see Fig. 5).

An internal structure of the device 19 of the present embodiment, as shown in Fig. 15, is basically the same as that of the above-mentioned device 2 (see Fig. 5).

However, a discharger 58 is provided adjacent to a circuit box 80, one discharge pipe 86 extends outside from the discharger 58, and another discharge pipe 87 is connected between a receptacle 83 and the discharger 58. The circuit box 80 and the discharger 58 are connected by wirings having connectors 98 and 99. Herein, the discharger 58 is the same as that employed in the device 18 (see Fig. 13).

Further, an outer casing 70 has an operating switch 55 at the back of the top face thereof, which switch 55 is connected to the circuit box 80 via a wiring L4.

Herein, the other part of the configuration of the device 19 of the present embodiment is the same as that of the above-mentioned device 2 (see Fig. 5), so that the same numerals are assigned to the same components, and the duplicated descriptions are omitted.

Operations of this device 19 are next to be described, making reference to Figs. 11 and 15.

First, a door 78a of a feeding tray 78 is opened so that electric devices 9 such as a cell phone 90 or memory cards 91 to 93 to be destroyed are accommodated therein. Then, a power switch SW is turned on and the operating switch 55 is pushed. Upon operation of the operating switch 55, the controlling circuit 52 controls a motor driving circuit 53 to drive a motor 77, thereby starting conveyance by the conveyor 82. Then, the electric device 9 dropped on a conveyor belt 74 from the feeding tray 78 is conveyed by the conveyor 82, pushes a door 73 to open it, and moves into the receptacle 83. When the electronic device 9 is conveyed into the receptacle 83, the door 73 automatically closes by an urging force.

When the electronic device 9 is conveyed into the receptacle 83 and the detection sensor 84 detects the conveyed electric device 9, the controlling circuit 52 halts the driving of the motor 77 once. Then, the controlling circuit 52 controls opening and closing of a heater current-carrying contact 36 and an anodal current-carrying contact 37 of an electromagnetic wave generating section 30, so as to apply an electromagnetic wave (microwave) to the electronic device 9. At the same time, the controlling circuit 52 outputs controlling signals to a discharge driving circuit 57 to start the driving of a discharger 58. Herein, the electromagnetic wave generating section 30 is controlled in a way similar to that shown in the above-mentioned embodiment, and thus, the description is omitted.

When application of the electromagnetic wave is finished, the controlling circuit 52 restarts the driving of the motor 77 to convey the electronic device 9 downstream. The conveyed electronic device 9 moves through the gap between a door 73 at downstream site and the conveyor belt 74 out of the receptacle 83. The electronic device 9 conveyed downstream is dropped from the conveyor 82 to be contained in a containing tray 79. After a predetermined period of time from completion of radiation of the electromagnetic wave, the controlling circuit 52 outputs controlling signals to the discharge driving circuit 57 to halt the driving of the discharger 58.

Repetition of the above-mentioned controlling sequentially destroys the electronic devices 9 such as the cell phone 90 or the memory cards 91 to 93 accommodated in the feeding tray 78 in a batch system.

Herein, the device 19 of the present embodiment has the receptacle 83 made of a magnetic material (iron) and also shielding plates 72 and the doors 73 attached to the front and rear faces of the receptacle 83 each made of a magnetic material (iron). Further, portions where the conveyor belt 74 extends through the receptacle 83, that is, the gaps at the lower ends of the doors 73 are small enough compared to a wave length (12cm) of the electromagnetic wave. Consequently, the electromagnetic wave radiated in the receptacle 83 is shielded by the receptacle 83, the shielding plates 72, and the doors 73, thereby hardly leaking out of the receptacle 83. Further, since the electromagnetic wave absorbing material 71 is attached to the inner surface of the casing 70 covering the entire device, even in the event that a part of the electromagnetic wave leaks out of the receptacle 83, an electromagnetic wave absorbing material 71 absorbs it, thereby completely preventing leaking out of the device.

In this way, according to the device 19 of the present embodiment, only insertion of the electronic devices 9 such as the cell phone 90 or the memory cards 91 to 93 automatically performs destruction, achieving efficient destruction of the electronic devices 9 in a short period of time. Further, leakage of a microwave is completely shielded, with the result that undesired effects to the human body are eliminated and security is improved.

Herein, the device 19 of the present embodiment applies procedures in such a batch system as to halt conveyance by the conveyor 82 once at the moment when the electronic device 9 is accommodated in the receptacle 83 so that an electromagnetic wave is applied thereto. However, the present invention may employ such a continuous system as to apply an electromagnetic wave while the electronic devices 9 are continuously conveyed by the conveyor 82, in addition to such a batch system.

Further, the present embodiment radiates an electromagnetic wave of substantially 2.45 GHz, but may use an electromagnetic wave having another frequency of a microwave band.

The configurations and the operations of the devices 18 and 19 for disposing of electronic devices relating to the embodiments of the present invention are detailed above, but the devices 18 and 19 are not limited to the configurations illustrated in the above-mentioned embodiments, but may also employ other embodiments.

For example, the devices 18 and 19 of the above-mentioned embodiments each are provided with the discharger 58 so as to force to discharge gas generated within the receptacle 60, but may be provided with an adsorber that uses an activated carbon within the receptacle 60. According to this configuration, the activated carbon adsorbs the gas, so as to prevent the gas from staying and to achieve deodorizing.

Further, appropriate setting of a frequency and an output of an electromagnetic wave radiated to the electronic device 9 and its radiation time minimizes heating of a main body casing or the printed circuit board of the electronic device 9, achieving destruction of its internal circuit in a short period of time, so as to minimize gas generation. This configuration is a simplified one that omits the discharger 58.

Electronic devices disposed of by the devices 18 and 19 are not limited to the cell phones 90 or the memory cards 91 to 93 shown in Figs. 13 and 15, and electronic devices such as boards (main board or mother board) mounting memory devices installed in a mobile device or a personal computer or an IC tag may be also efficiently disposed of.

Further, the devices 1 to 4 for dealing with data recording media shown in Figs 1 to 10 may also employ the discharge driving circuit 57 and the discharger 58 employed in the devices 18 and 19 for disposing of electronic devices shown in Figs. 11 to 15.

## Claims

1. A method for dealing with data recording media using a device provided with a generator of a magnetic field and a generator of an electromagnetic wave, the method comprising the steps of:
generating at least one selected from a magnetic field and an electromagnetic wave; and
applying individually one selected from the magnetic field and the electromagnetic wave or simultaneously the both to a data recording medium,
so as to erase or destroy data recorded in the medium.

2. A device for dealing with data recording media comprising:
an excitation coil for generating a magnetic field;
a magnetron for radiating an electromagnetic wave; and
a receptacle adapted to accommodate a data recording medium,
wherein the receptacle is made of a non-magnetic material capable of shielding the electromagnetic wave;
wherein the receptacle has an outer periphery around which the excitation coil is wound so as to induce a magnetic field within the receptacle; and
wherein the receptacle has a wall provided with the magnetron, so that the electromagnetic wave is radiated toward inside of the receptacle.

3. A device for dealing with data recording media comprising:
a magnetron for radiating an electromagnetic wave; and
a receptacle adapted to accommodate a data recording medium,
the receptacle being made of one selected from a non-magnetic material capable of shielding the electromagnetic wave and a magnetic material,
wherein the receptacle has a wall provided with the magnetron, so that the electromagnetic wave is radiated toward inside of the receptacle.

4. The device as defined in claim 2 or 3, further comprising at least one selected from an adsorber for adsorbing gas generated from the data recording medium by radiation of the electromagnetic wave and a discharger for discharging gas generated from the data recording medium out of the receptacle.

5. The device as defined in one of claims 2 to 4,
wherein the receptacle has a door made of a magnetic material, through which the data recording medium is accommodated therein and taken out thereof.

6. The device as defined in one of claims 2 to 4, further comprising:
a conveyor adapted to convey the data recording medium so as to extend through the receptacle; and
a door made of a magnetic material and being openable and closable at a portion where the conveyor extends through the receptacle.

7. The device as defined in claim 6,
wherein the conveyor is adapted to continuously convey a plurality of the data recording media at a predetermined speed,
so that data recorded in the data recording media placed on the conveyor is continuously erased or destroyed while the media are continuously conveyed at the predetermined speed.

8. The device as defined in claim 6,
wherein the conveyer is adapted to intermittently convey a plurality of the data recording media,
so that data recorded in the data recording media placed on the conveyor is erased or destroyed in a batch method while the media are intermittently conveyed.

9. The device as defined in one of claims 2 to 8,
wherein the receptacle has at least a part of its outer side covered with a casing made of a magnetic material.

10. The device as defined in claim 9,
wherein the casing has at least a part of its inner surface provided with an electromagnetic wave absorbing material.

11. The device as defined in one of claims 2 to 10,
wherein the magnetron is adapted to radiate an electromagnetic wave having a frequency of a microwave band within a range of 300 MHz to 300 GHz.

12. The device as defined in one of claims 2 to 11,
wherein the magnetron is adapted to radiate an electromagnetic wave that is a microwave having a frequency of substantially 2.45 GHz or substantially 4.3 GHz.

13. The device as defined in one of claims 2 and 4 to 12,
being adapted to apply an attenuating alternating voltage whose peak value reduces as time passes to the excitation coil, so as to induce within the receptacle an attenuating alternating magnetic field whose peak value of magnetic flux density reduces as time passes.

14. The device as defined in one of claims 2 to 13,
wherein the receptacle is adapted to accommodate an electronic device incorporating a memory device and to destroy data stored in the memory device by radiating an electromagnetic wave to the electronic device accommodated therein.

15. A method for disposing of electronic devices, the method comprising the steps of:
generating an electromagnetic wave; and
radiating the electromagnetic wave to an electronic device, so as to mechanically destroy at least a memory device incorporated in the electronic device to prevent data stored in the memory device from being read out.

16. The method as defined in claim 15,
wherein the electronic device is adapted to mount therein another electronic device incorporating a memory device,
so that at least the memory device incorporated in the other electronic device mounted in the electronic device is mechanically destroyed by radiation of the electromagnetic wave to the electronic device so that data stored in the memory device is prevented from being read out.

17. A device for disposing of electronic devices comprising:
a magnetron adapted to radiate an electromagnetic wave of a predetermined frequency at a predetermined strength; and
a receptacle made of a magnetic material and adapted to accommodate an electronic device,
wherein the magnetron is attached to the receptacle, so as to radiate the electromagnetic wave toward inside of the receptacle.

18. The device as defined in claim 17, further comprising at least one selected from an adsorber for adsorbing gas generated from the electronic device by radiation of the electromagnetic wave and a discharger for discharging gas generated from the electronic device out of the receptacle.

19. The device as defined in claim 17 or 18,
wherein the receptacle has a door made of a magnetic material, through which the electronic device is accommodated therein and taken out thereof.

20. The device as defined in claim 17 or 18, further comprising:
a conveyor adapted to convey the electronic device into and out of the receptacle; and
a plurality of doors each made of a magnetic material and being openable and closable, one door at one portion through which the electronic device is conveyed into the receptacle and another door at another portion through which the electronic device is conveyed out of the receptacle.

21. The device as defined in claim 20,
wherein the conveyor is adapted to continuously convey a plurality of the electronic devices placed thereon at a predetermined speed,
so that the electronic devices are continuously destroyed while being continuously conveyed at the predetermined speed.

22. The device as defined in claim 20,
wherein the conveyer is adapted to intermittently convey a plurality of the electronic devices placed thereon,
so that the electronic devices are destroyed in a batch method while being intermittently conveyed.

23. The device as defined in one of claims 17 to 22,
wherein the receptacle has at least a part of its outer side covered with an outer casing made of a magnetic material.

24. The device as defined in claim 23,
wherein the casing has at least a part of its inner surface provided with an electromagnetic wave absorbing material.

25. The device as defined in one of claims 17 to 24,
wherein the magnetron is adapted to radiate an electromagnetic wave having a frequency of a microwave band within a range of 300 MHz to 300 GHz.

26. A device for dealing with data recording media comprising:
a receptacle adapted to destroy a data recording medium therein;
a conveying means for conveying an electronic device into and out of the receptacle; and
a feeding means for feeding with the data recording medium.

27. The device as defined in claim 26,
wherein the conveying means is a conveyor, the conveyor being positioned so as to extend through the receptacle, and
further comprising a door made of a magnetic material and being openable and closable at a portion where the conveyor extends through the receptacle.

28. The device as defined in claim 26,
wherein the conveying means is a conveyor,
the conveyor being positioned so as to extend through the receptacle,
the conveyor being adapted to continuously convey a plurality of the data recording media at a predetermined speed,
so that data recorded in the data recording media placed on the conveyor is continuously erased or destroyed while the media are continuously conveyed at the predetermined speed.

29. The device as defined in claim 26,
wherein the conveying means is a conveyor,
the conveyor being positioned so as to extend through the receptacle,
the conveyer being adapted to intermittently convey a plurality of the data recording media,
so that data recorded in the data recording media placed on the conveyor is erased or destroyed in a batch method while the media are intermittently conveyed.

30. A device for dealing with data recording media comprising:
a magnetron adapted to radiate an electromagnetic wave having a frequency of a microwave band within a range of 300 MHz to 300 GHz;
an excitation coil for generating a magnetic field;
a receptacle adapted to accommodate a data recording medium; and
a discharger,
wherein the receptacle is made of a non-magnetic material capable of shielding the electromagnetic wave;
wherein the receptacle has a door made of a magnetic material, through which the data recording medium is accommodated therein and taking out thereof;
wherein the receptacle has an outer periphery around which the excitation coil is wound,
wherein the device is adapted to apply an attenuating alternating voltage whose peak value reduces as time passes to the excitation coil, so as to induce an attenuating alternating magnetic field whose peak value of magnetic flux density reduces as time passes within the receptacle;
wherein the receptacle has a wall provided with the magnetron, so that the electromagnetic wave is radiated toward inside of the receptacle; and
wherein the discharger is adapted to discharge gas generated from the data recording medium out of the receptacle.
